# EUROPEAN PATENT SPECIFICATION

(11) **EP 2 128 510 B1**
(45) Date of publication and mention of the grant of the patent: **16.09.2015**
(21) Application number: 07859987.5
(22) Date of filing: 21.12.2007
(51) Int. Cl.: F16L 37/08, F16L 37/088, F16L 33/207

(54) **PIPE FITTING**
ROHRANSCHLUSSSTÜCK
RACCORD DE TUYAU

(30) Priority: 27.12.2006 JP 2006353168; 27.12.2006 JP 2006353170; 22.08.2007 JP 2007215749
(43) Date of publication of application: 02.12.2009
(73) Proprietor: Bridgestone Corporation, Tokyo 104-8340 (JP)
(72) Inventor: UDO, Fumiyasu, Tokyo 104-8340 (JP); MINE, Kenji, Kazo-shi Saitama 347-0017 (JP); NAKABAYASHI, Kuniaki, Kazo-shi Saitama 347-0017 (JP)
(74) Representative: Oxley, Robin John George
(86) International application number: PCT/JP2007/074758
(87) International publication number: WO 2008/078719

(56) References cited:
- GB-A- 2 375 379
- JP-A- 07 301 383
- JP-A- 11 355 934
- JP-A- 2004 044 812
- JP-A- 2006 250 301
- JP-U- 05 083 583
- US-A- 4 906 031

## Description

### Technical Field

The present invention relates to a pipe fitting, for use when connecting together piping of an automobile, construction machinery, or machine tool etc., the pipe fitting equipped with a circular cylindrical shaped male body and a circular cylindrical shaped female body into which the male body is inserted, and relates to a hose equipped with at least one of the male body and/or the female body.

### Related Art

Connecting has been performed since before using pipe fittings when assembling one pipe to another pipe.

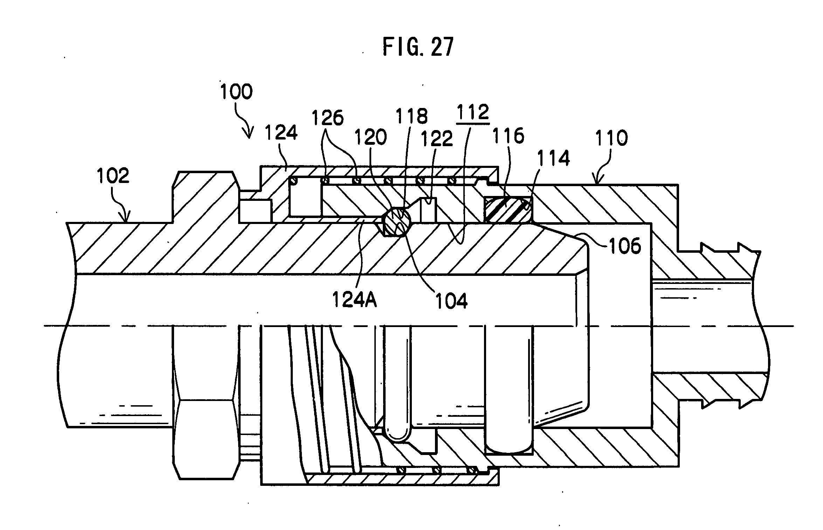

For example, as shown in FIG 27, a pipe fitting 100 is configured with a circular cylindrical shaped male body 102 and a circular cylindrical shaped female body 110, equipped with an opening 112 into which the male body 102 is inserted. An annular groove 104 is formed to the peripheral surface of the male body 102 for locking a resilient ring body 120. An annular shaped groove portion 114 is formed at the far side of the opening 112 of the female body 110, and an O-ring 116 is provided in the groove portion 114. An annular small diameter groove 118 is formed at the entry side of the opening 112 of the female body 110, and the resilient ring body 120 is locked in the small diameter groove 118. A large diameter groove 122 is formed at a position adjacent to the far side of the small diameter groove 118, into which the resilient ring body 120 retreats when the male body 102 is inserted into the opening 112. A substantially U-shaped ring-shaped cover 124 is disposed at the entry side of the opening 112 of the female body 110, such that one end portion 124A of the ring-shaped cover 124 makes contact with the resilient ring body 120, and a spring 126 is inserted interposed between the inside of the U-shape of the ring-shaped cover 124 and the female body 110.

In the pipe fitting 100 as above, when the male body 102 is pushed into the opening 112 of the female body 110, a tapered face 106 at the distal end of the male body 102 impacts against the resilient ring body 120 and pushes the resilient ring body 120 into the large diameter groove 122. When the male body 102 is pushed in further, the resilient ring body 120 is also expanded in diameter in the large diameter groove 122 along with the increasing diameter of the tapered face 106. As the male body 102 continues to be pushed in, when the annular groove 104 of the male body 102 reaches the large diameter groove 122 the diameter of the resilient ring body 120 shrinks to return to its original diameter under its own elastic force, and the resilient ring body 120 is housed in the annular groove 104 of the male body 102 and in the small diameter groove 118 of the female body 110, thereby completing jointing of the male body 102 with the female body 110 (see, for example, Japanese Patent Application Laid-Open No. 5-256390).

In the pipe fitting 100, in order to separate the male body 102 from the female body 110 the ring-shaped cover 124 is pushed in toward the rear side of the female body 110 against force of the spring 126. When this occurs the one end portion 124A of the ring-shaped cover 124 pushes the resilient ring body 120 into the large diameter groove 122, and locking of the resilient ring body 120 in the annular groove 104 is released. The male body 102 then becomes removable from the female body 110 in this state.
US 4906031 discloses a pipe fitting according to the preamble of claim 1.

### Disclosure of the Invention

### Problem to be solved by the Invention

However, in the pipe fitting 100 as above, if during use the ring-shaped cover 124 is unintentionally pushed toward the rear side of the female body 110 then the join between the male body 102 and the female body 110 sometimes comes apart.

In the pipe fitting 100, once the male body 102 and the female body 110 have been joined together, they are not then separated except in exceptional circumstances, and it is not necessarily always required to provided separation functionality to the pipe fitting 100. Since there is a concern of separation occurring, due to unintentional separation or vandalism etc., with the separable pipe fitting 100, an inseparable pipe fitting is desired when separation of pipes is not required.

In addition, in the separable pipe fitting 100, because of there being the ring-shaped cover 124, the outer diameter of the pipe fitting becomes greater, and the number of components increases, leading to an increase in cost. Since there is an extra allowance in the female body 110 for the separation operation pressing-in the male body 102, there is also the disadvantage that the overall length of the pipe fitting 100 becomes longer.

The present invention is made in consideration of the above circumstances and provides a compact pipe fitting that is inseparable once a male body and a female body have been joined together, and a hose of the same.

### Method of Addressing the Subject

In order to address the above subjects, the present invention provides a pipe fitting as set out in Claim 1.

In a first preferred embodiment, the resilient ring shaped stopping member is formed with an outer peripheral diameter that is larger than the internal diameter of the first inner wall face and smaller than the internal diameter of the locking groove, and the outer peripheral diameter of the resilient ring shaped stopping member when both end portions thereof make contact with each other is smaller than the internal diameter of the first inner wall face and larger than the internal diameter of the second inner wall face.

Preferably, when (1) is the case, the angle made between the wall face at the distal end side of the annular groove and an axial line of the pipe fitting is 90° to 30°, and the angle made between the wall face at the opening side of the locking groove and the axial line of the pipe fitting is 90° to 45°.

Preferably, when (2) is the case, the angle made between the wall face at the opening end side of the annular groove and an axial line of the pipe fitting is 90° to 30°, and the angle made between the wall face at the distal end side of the locking groove and the axial line of the pipe fitting is 90° to 45°.

Preferably, the hardness of the female body is greater than the hardness of the male body.

The present invention further provides a hose with the pipe fitting of the invention, wherein the male body alone or the female body alone is provided to one end of the hose, or two of the male bodies, two of the female bodies, or one of the male body and one of the female body are provided at the both ends of the hose.

In the hose with the pipe fitting, the female body of the pipe fitting is preferably at least at the one end of the hose; and the hose has an internal face layer, reinforcement layer at the outside of the internal face layer, and an outer face layer at the outside of the reinforcement layer.

Preferably the reinforcement layer has metal wire meshing or metal wire wound therein.

According to the present invention, when (1) is the case, in order to join the male body and the female body, the male body is inserted into the opening of the female body. When the male body is inserted, since the inner peripheral diameter of the resilient ring shaped stopping member is smaller than the outer diameter of the second circular cylindrical portion of the male body, the outer tapered portion (16) of the male body contacts the resilient ring shaped stopping member, and the resilient ring shaped stopping member is pushed into the containing groove. When the male body is pushed in further, since the outer tapered portion (16) slopes outward from the second circular cylindrical portion, the resilient ring shaped stopping member expands in diameter in the containing groove. When the male body continues to be pushed in and the second circular cylindrical portion of the male body passes the containing groove, the resilient ring shaped stopping member shrinks in diameter and returns to its original diameter due to its own elastic force, fitting into the annular groove of the male body. When a liquid flows through the pipe fitting in this state, due to the increase in pressure, a force acts on the male body to move the male body in the opposite direction to the insertion direction thereof, housing the resilient ring shaped stopping member in the locking groove of the female body. When this occurs, since the inner radius of the female body at a portion where the containing groove is provided is larger than the sum of the radius of the second circular cylindrical portion and the diameter of the cross sectional face of the resilient ring shaped stopping member, and the depth of the annular groove in the radial direction of the male body from the first circular cylindrical portion and the depth of the locking groove in the radial direction of the female body from the first inner wall face are formed greater than the diameter of the cross sectional face of the resilient ring shaped stopping member, the resilient ring shaped stopping member makes contact with the locking groove of the female body and the annular groove of the male body. The male body is thereby prevented from coming out from the female body, and the joint of the male and female bodies is held even under increased pressure. Namely, once the male body and the female body have been joined, the male body and the female body are prevented from separating by the resilient ring shaped stopping member inserted (housed) in the locking groove of the female body and the annular groove of the male body.

Also, vibration between the male body and the female body is suppressed since the first circular cylindrical portion of the male body contacts the first inner wall face of the female body, and the second circular cylindrical portion of the male body contacts the second inner wall face of the female body. In addition, by provision of the second circular cylindrical portion having a length in the axial direction of the male body, the life of the pipe fitting can be maintained due to the second circular cylindrical portion , even when the second circular cylindrical portion is wore by the resilient ring shaped stopping member.

According to the invention, when (2) is the case, in order to join the male body and the female body, the male body is inserted into the opening of the female body. When this occurs, the diameter of the resilient ring shaped stopping member disposed in the male body shrinks due to the resilient ring shaped stopping member making contact with the outer tapered portion (16) of the female body, and the male body is inserted into the opening. When the male body is pushed in further and the resilient ring shaped stopping member reaches the annular groove of the female body, the resilient ring shaped stopping member expands in diameter and returns to its original diameter due to its own elastic force, fitting into the annular groove of the female body. When a liquid flows through the pipe fitting in this state, due to the increase in pressure a force acts to move the male body in the opposite direction to that of the insertion direction, housing the resilient ring shaped stopping member in the locking groove of the male body. When this occurs, since the inner radius of a portion of the male body where the containing groove is formed is smaller than the length of the radius of the first inner wall face minus the diameter of a cross sectional face of the resilient ring shaped stopping member, and the sum of the depth in a radius direction of the annular groove from the first inner wall face and the depth in a radius direction of the locking groove from the first circular cylindrical portion is formed greater than the diameter of the cross sectional face of the resilient stop ring body, the resilient ring shaped stopping member makes contact with the locking groove of the male body and the annular groove of the female body. The male body is thereby prevented from coming out from the female body, and the joint of the male body and the female body is held even under increased pressure. Namely, once the male body and the female body have been joined, the male body and the female body are prevented from separating by the resilient ring shaped stopping member inserted (housed) in the locking groove of the male body and the annular groove of the female body.

Also, vibration between the male body and the female body is suppressed since the first circular cylindrical portion of the male body contacts the first inner wall face of the female body, and the second circular cylindrical portion of the male body contacts the second inner wall face of the female body. In addition, by provision of the second circular cylindrical portion having a length in the axial direction of the male body, the life of the pipe fitting can be maintained due to the second circular cylindrical portion, even when the second circular cylindrical portion is wore by the resilient ring shaped stopping member.

According to the pipe fitting of the present invention, by provision of the third circular cylindrical portion at the distal end side of the outer tapered portion of the male body, and provision of the third inner wall face at the inside of the inner tapered portion of the female body, vibration between the male body and the female body can be suppressed even further by the third circular cylindrical portion and the third inner wall face making contact when the male body and the female body are joined. In addition, since the seal member containing groove is disposed in a position which is less affected by vibration, the resilient ring shaped seal member is not readily damaged. Manufacturability is also good since there is a step between the seal member containing groove and the containing groove of the resilient ring shaped stopping member.

According to the pipe fitting of the present invention, space efficiency and applicability to mass production is good since the resilient ring shaped seal member is disposed in the seal member containing groove formed in the third inner wall face.

In the first preferred embodiment, during assembly of the pipe fitting, the resilient ring shaped stopping member is fitted into the two-step groove of the female body. Since the outer peripheral diameter of the resilient ring shaped stopping member when both end portions thereof make contact with each other is smaller than the internal diameter of the first inner wall face, by applying force to the resilient ring shaped stopping member, the resilient ring shaped stopping member can be inserted into the first inner wall face of the female body in a shrunken diameter state, and inserted up to the two-step groove at the rear of the first inner wall face. When the force applied to the resilient ring shaped stopping member is released, the diameter of the resilient ring shaped stopping member expands and returns to its original diameter due to elastic force. When this occurs, since the outer peripheral diameter of the resilient ring shaped stopping member is larger than the internal diameter of the first inner wall face, the resilient ring shaped stopping member is fitted into the two-step groove and the resilient ring shaped stopping member is prevented from coming out. In addition, since the outer peripheral diameter of the resilient ring shaped stopping member when both end portions thereof make contact with each other is larger than the internal diameter of the second inner wall face, the resilient ring shaped stopping member is prevented from being inserted right to the back of the female body. The resilient ring shaped stopping member can thereby be readily fitted into the two-step groove of the female body, and the suitability to mass production of the pipe fitting becomes even better.

When (1) is the case, the angle made between the wall face at the distal end side of the annular groove and the axial line of the pipe fitting is preferably 90° to 30°, and the angle made between the wall face at the opening side of the locking groove and the axial line of the pipe fitting is 90° to 45°, the resilient ring shaped stopping member therefore does not readily move during pressurization, and the resilient ring shaped stopping member fitted into the annular groove and the locking groove can be suppressed from falling into the containing groove.

When (2) is the case, the angle made between the wall face at the opening end side of the annular groove and the axial line of the pipe fitting is preferably 90° to 30°, and the angle made between the wall face at the distal end side of the locking groove and the axial line is 90° to 45°, the resilient ring shaped stopping member therefore does not readily move during pressurization, and the resilient ring shaped stopping member fitted into the annular groove and the locking groove can be suppressed from falling into the containing groove.

According to the pipe fitting of the present invention, the relationship A > B is satisfied, where A is the length in the axial direction of the second circular cylindrical portion, and B is the length in the axial direction from the distal end of a portion having an uniform outer diameter of the third circular cylindrical portion to the rear end at the base side of a contact portion between the resilient ring shaped seal member and the third circular cylindrical portion, therefore even if the second circular cylindrical portion of the male body gets worn by rotation of the male body and the female body, the resilient ring shaped seal member comes away from the third circular cylindrical portion while in a state in which there is still wear allowance remaining at the second circular cylindrical portion of the male body. Therefore the end of life of the pipe fitting can be detected by liquid leaking out, before the male body comes out from the female body due to wear of the male body.

When the hardness of the female body is greater than the hardness of the male body, as wear of the male body (particularly the second circular cylindrical portion) progresses during rotation of the male body and the female body, wear of the female body can be suppressed.

According to the pipe fitting of the present invention, a marker is provided at the first circular cylindrical portion of the male body that corresponds to the first inner wall face of the female body, and the relationship A > B > C is satisfied where C is the length in the axial direction from the distal end at the opening side of the first inner wall face to the end portion at the opening side of the marker. Therefore, the marker at the first circular cylindrical portion of the male body is exposed from the distal end of the female body as wear of the second circular cylindrical portion of the male body progresses. Nearing of the end of life of the pipe fitting due to wearing of the male body can thereby be detected.
When wear of the male body progresses still further, the resilient ring shaped seal member comes away from the third circular cylindrical portion of the male body while there is still some of the wear allowance remaining on the second circular cylindrical portion of the male body. Therefore the end of life of the pipe fitting can be detected by liquid leaking out, before the male body comes out from the female body.

According to the pipe fitting of present invention, since a ring shaped dust seal is housed, as the marker, in the annular groove formed in the first circular cylindrical portion, foreign matter, such as sand etc. can be suppressed from entering between the first circular cylindrical portion of the male body and the first inner wall face of the female body. Wear of the male body due to foreign matter can therefore be suppressed.

According to the present invention, since the hose is equipped with the male body or the female body of the pipe fitting, wherein the male body alone or the female body alone is provided to one end of the hose, or two of the male bodies, two of the female bodies, or one of the male body and one of the female body are provided at the both ends of the hose, the hose can be connected to another pipe etc. via the male body or female body of the above pipe fitting.

If the female body of the pipe fitting is at least at the one end of the hose, operability is good even in a confined space when connecting the hose to another pipe. If the hose is equipped with an internal face layer, a reinforcement layer on the outside of the internal face layer, and an outer face layer on the outside of the reinforcement layer, the strength of the hose can be secured.

If the reinforcement layer has metal wire meshing or metal wire wound therein, the strength of the hose can be increased even further.

### Effect of the Invention

According to the pipe fitting of the present invention, the male body and the female body are inseparable once they have been joined, and separation, such as due to unintentional separation or vandalism etc., can be prevented. In addition, the pipe fitting can be made compact due to the outer diameter and the length etc. of the pipe fitting being short, the number of components is small and reduction in cost can be made.

According to the hose of the present invention, the hose can be connected to another pipe etc. via the male body or female body of the pipe fitting.

### Brief Description of the Drawings

FIG. 1 is a cross-section cut in half showing a joined state of a male body and a female body of a pipe fitting according to a first exemplary embodiment, not according to the invention;
FIG. 2 is an enlarged cross-section showing a portion of a joined state of the male body and the female body of a pipe fitting according to the first exemplary embodiment;
FIG. 3 is a cross-section cut in half showing a state of separation of the male body and the female body of a pipe fitting according to the first exemplary embodiment;
FIG. 4A is a diagram showing a resilient stop ring body on its own.
FIG. 4B is a diagram showing the dimensional relationship of the resilient stop ring body to a male body and a female body;
FIG. 5A is a diagram showing the resilient stop ring body in a shrunken diameter state;
FIG. 5B is a diagram showing the dimensional relationship of the resilient stop ring body to the female body when in the shrunken diameter state;
FIG. 6 is an enlarged partial cross-section showing a state in which the resilient stop ring body is locked in a locking groove of the female body and an annular groove of the male body;
FIG. 7 is an enlarged partial cross-section for explaining the joining process when the male body shown in FIG. 3 is inserted into the female body shown in FIG. 3;
FIG. 8 is a cross-section cut in half showing a process of connecting a female body of a pipe fitting to a hose, according to a second exemplary embodiment, not according to the invention;
FIG. 9 is a cross-section cut in half showing a state in which the female body of the pipe fitting has been connected to a hose, according to the second exemplary embodiment;
FIG. 10 is a cross-section cut in half showing a process of connecting a female body of a pipe fitting to a hose, according to a third exemplary embodiment, not according to the invention;
FIG. 11 is a cross-section cut in half showing a state in which the female body of the pipe fitting has been connected to a hose, according to the third exemplary embodiment;
FIG. 12A is perspective view showing a first exemplary modification of a hose;
FIG. 12B is perspective view showing a second exemplary modification of a hose;
FIG. 13 is a cross-section cut in half showing a joined state of a male body and a female body of a pipe fitting according to a fourth exemplary embodiment, not according to the invention;
FIG. 14 is a cross-section cut in half showing a joined state of a male body and a female body of a pipe fitting according to a fifth exemplary embodiment, not according to the invention;
FIG. 15 is a cross-section cut in half showing a state of separation of a male body and a female body of a pipe fitting according to a sixth exemplary embodiment not according to the invention;
FIG. 16 is a cross-section cut in half showing a joined state of the male body and the female body of a pipe fitting according to the sixth exemplary embodiment;
FIG. 17 is a cross-section cut in half showing a joined state of a male body and a female body of a pipe fitting according to a seventh exemplary embodiment, not according to the invention;
FIG. 18 is a cross-section cut in half showing an expanded view of a portion of the joined state of the male body and female body of a pipe fitting according to the seventh exemplary embodiment;
FIG. 19 is a cross-section cut in half showing a state of separation of the male body and the female body of a pipe fitting according to the seventh exemplary embodiment;
FIG. 20 is a cross-section cut in half showing operation when the male body of the pipe fitting shown in FIG. 18 has been worn;
FIG. 21 is a cross-section cut in half showing operation when the male body of the pipe fitting shown in FIG. 18 has been worn;
FIG. 22 is a cross-section cut in half showing a joined state of a male body and a female body of a pipe fitting according to an eighth exemplary embodiment, according to the invention;
FIG. 23 is an enlarged cross-section showing a portion of a joined state of the male body and the female body of a pipe fitting according to the eighth exemplary embodiment;
FIG. 24 is a cross-section cut in half showing operation when the male body of the pipe fitting shown in FIG. 22 has been worn;
FIG. 25 is a cross-section cut in half showing operation when the male body of the pipe fitting shown in FIG. 22 has been worn;
FIG. 26 is an expanded cross-section showing a portion of a joined state of a male body and a female body of a pipe fitting according to a ninth exemplary embodiment, according to the invention;
FIG. 27 is a cross-section cut in half showing a joined state of a male body and a female body of a conventional pipe fitting.

### Best Mode of Implementing the Invention

Explanation will now be given of exemplary embodiments with reference to the drawings.

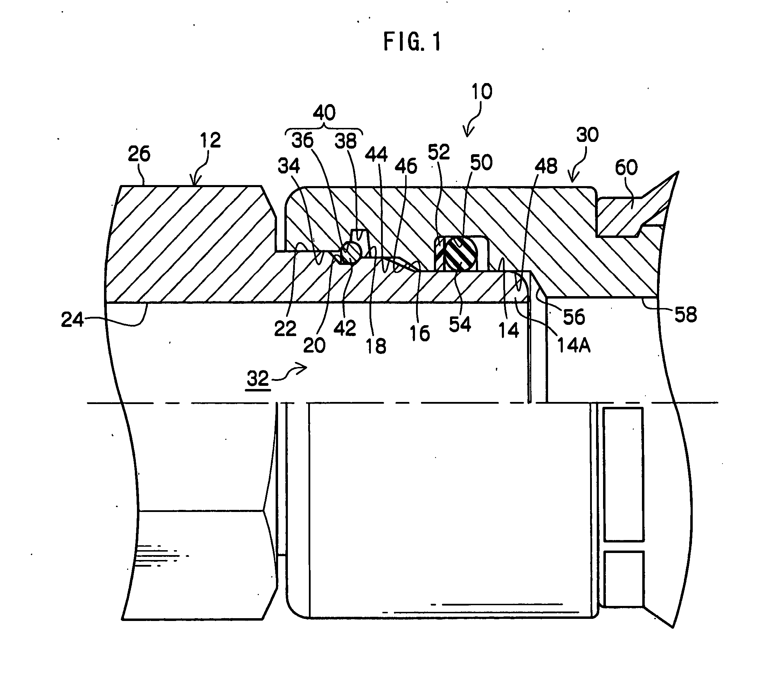

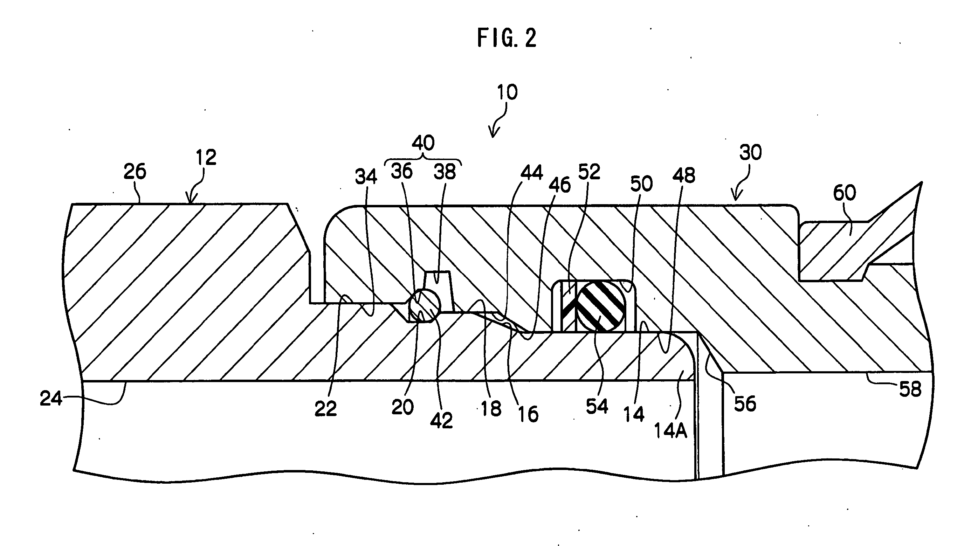

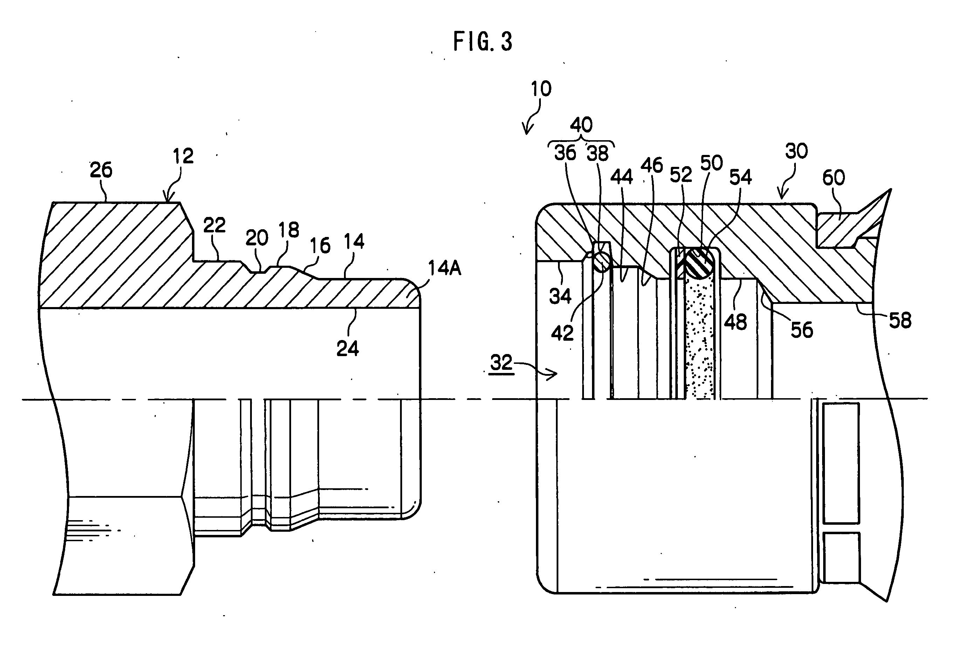

FIG. 1 is a cross-section cut in half showing a joined state of a pipe fitting 10 in a first exemplary embodiment which is not according to the present invention but is useful for understanding it, and FIG. 2 is an enlarged cross-section of a portion of the pipe fitting 10. FIG. 3 is a cross-section cut in half showing a state of separation of the pipe fitting 10.

The pipe fitting 10 is configured to include a circular cylindrical shaped male body 12 and a circular cylindrical shaped female body 30 into which the male body 12 is inserted. As shown in FIG. 1 and FIG. 3, the male body 12 is of small diameter at the distal end side in the length direction thereof, and is equipped with, from the distal end toward the base: a third circular cylindrical portion 14; an outer tapered portion 16, sloping toward the outside, at a location at the rear side (the base side) of the third circular cylindrical portion 14; and a second circular cylindrical portion 18, having a larger outer diameter than the third circular cylindrical portion 14, at a location connecting to the rear side of the outer tapered portion 16. The male body 12 is also equipped with: an annular groove 20 of substantially trapezoidal cross-sectional profile, at a location connected to the rear side of the second circular cylindrical portion 18, the annular groove 20 locking a resilient stop ring body 42, serving as a resilient ring shaped stopping member, when the male body 12 is inserted into the female body 30; and a first circular cylindrical portion 22, at a location connecting to the rear of the annular groove 20, the first circular cylindrical portion 22 having an outer diameter larger than that of the second circular cylindrical portion 18. A circular shaped flow path 24 through which a liquid flows is provided at the core portion of the male body 12. A hexagonal portion 26 for applying a spanner thereto is provided at the rear of the first circular cylindrical portion 22 (at the central portion side) of the male body 12.

As shown in FIG 2 and FIG 3, the female body 30 is equipped with an opening 32 into which the male body 12 is inserted, and the entry side of the opening 32 is equipped with a first inner wall face 34 corresponding to the first circular cylindrical portion 22 of the male body 12. The female body 30 is equipped with a two-step groove 40 formed by a locking groove 36 that houses the resilient stop ring body 42, serving as an resilient ring shaped stopping member, when the male body 12 and the female body 30 are joined together, and an adjacent containing groove 38 at a back side of the locking groove 36 into which the resilient stop ring body 42 retreats during the joining operation. The female body 30 is also equipped with: a second inner wall face 44, corresponding to the second circular cylindrical portion 18 of the male body 12, at a location connecting to the back side portion of the two-step groove 40; an inner tapered portion 46 sloping inwards toward the back side from the second inner wall face 44; and a third inner wall face 48, corresponding to the third circular cylindrical portion 14 of the male body 12, at a location connected to the back side of the inner tapered portion. Also an annular containing groove 50, serving as a seal member containing groove, is formed to the third inner wall face 48. The containing groove 50 is formed in a straight-sided U-shape in cross-section. The containing groove 50 contains a ring member 52, made from resin, disposed at the opening 32 side thereof, and an O-ring 54 made from rubber, serving as a resilient ring shaped seal member, disposed at the far side thereof.

The inner radius at the containing groove 38 portion of the female body 30 is greater than the length of the sum of the radius of the second circular cylindrical portion 18 and the diameter of a cross sectional face of the resilient stop ring body 42, and the depth in the radial direction of the containing groove 50 from the first circular cylindrical portion 22 and the depth in the radial direction of the locking groove 36 from the first inner wall face 34 are formed greater than the diameter of the resilient stop ring body 42.

A wall face 56 is also formed at the farthest portion from the opening 32 of the female body 30, connected to a flow path 58, in the core portion of the female body 30 through which a liquid flows. A fastening 60 for connecting a hose is provided at the opposite side in the length direction of the female body 30 to that of the opening 32.

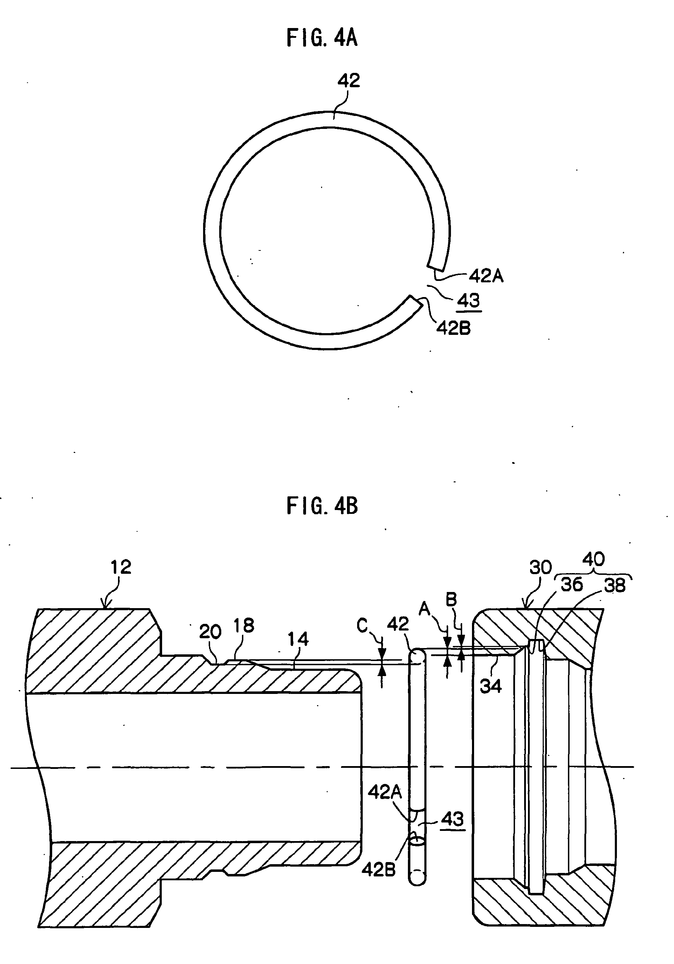

The resilient stop ring body 42 is, as shown in FIG. 4A, formed from a ring shaped member of circular shape in cross-section, equipped with a gap 43 formed by cutting away a portion of the ring shaped member. Namely, the gap 43 is formed between end faces 42A, 42B of the resilient stop ring body 42. The resilient stop ring body 42 is, for example, formed from a metal, such as stainless steel, and is capable of shrinking in diameter by resilient deformation from a free state having the gap 43 to where the end faces 42A, 42B make contact with each other. Also, as shown in FIG 4B, the outer peripheral diameter of the resilient stop ring body 42 in the free state having the gap 43 is set larger than the internal diameter of the first inner wall face 34 of the female body 30 (see dimension A), and smaller than the internal diameter of the locking groove 36 (see dimension B). The inner peripheral diameter of the resilient stop ring body 42 is also set smaller than the outer diameter of the second circular cylindrical portion 18 of the male body 12 (see dimension C). Consequently, the male body 12 can be inserted into the opening 32 of the female body 30, and when joined the resilient stop ring body 42 makes contact with the annular groove 20 of the male body 12 and with the locking groove 36 of the female body 30, and can be locked to the male body 12 and the female body 30.

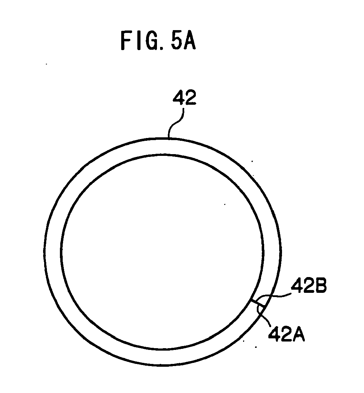

As shown in FIG 5A and FIG. 5G, when the resilient stop ring body 42 is resiliently deformed and the end faces 42A, 42B make contact with each other, the outer peripheral diameter (outer peripheral separation distance) of the resilient stop ring body 42 is set smaller than the internal diameter (inner peripheral separation distance) of the first inner wall face 34 of the female body 30 (see dimension D).

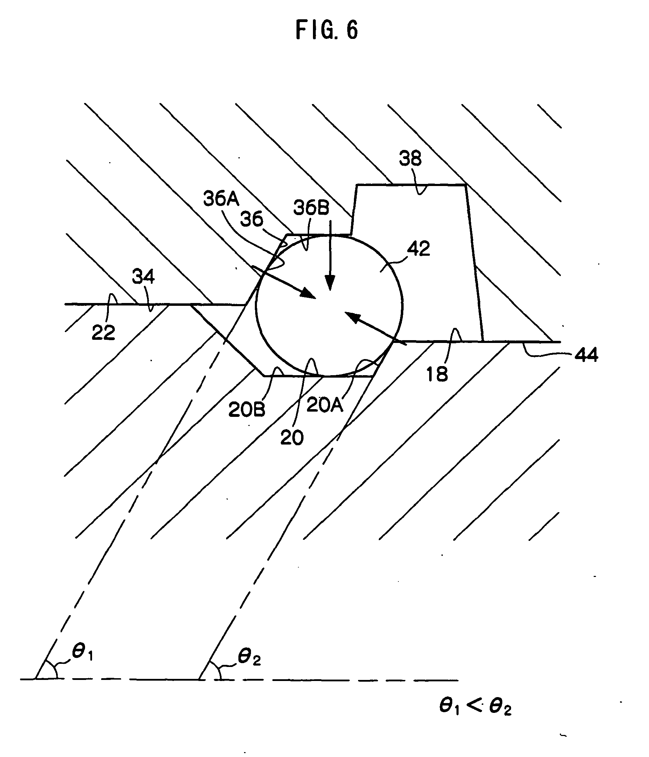

As shown in FIG 6, the locking groove 36 of the female body 30 is configured with a wall face 36A at the opening 32 side, sloping so as to increase in size at the far side, and at the far side of the wall face 36A, a wall face 36B that is formed substantially parallel to the axial line. The angle *θ*1, made between the wall face 36A of the opening 32 side of the locking groove 36 and the axial line, is set from 90° to 30°. The angle *θ*2, made between the wall face 20A at the second circular cylindrical portion 18 side of the annular groove 20 of the male body 12 and the axial line, is set at 90° to 45°. If the angle *θ*1 made between the wall face 36A of the opening 32 side of the locking groove 36 and the axial line is not 90° then the angle *θ*2, made between the wall face 20A of the annular groove 20 and the axial line, is set greater than the angle *θ*1, made between the wall face 36A of the locking groove 36 and the axial line. Configuration is thus made such that the resilient stop ring body 42 makes contact with the wall face 36A and the wall face 36B of the locking groove 36 of the female body 30, and with the wall face 20A of the annular groove 20 of the male body 12.

Explanation will now be given of operation of the pipe fitting 10.

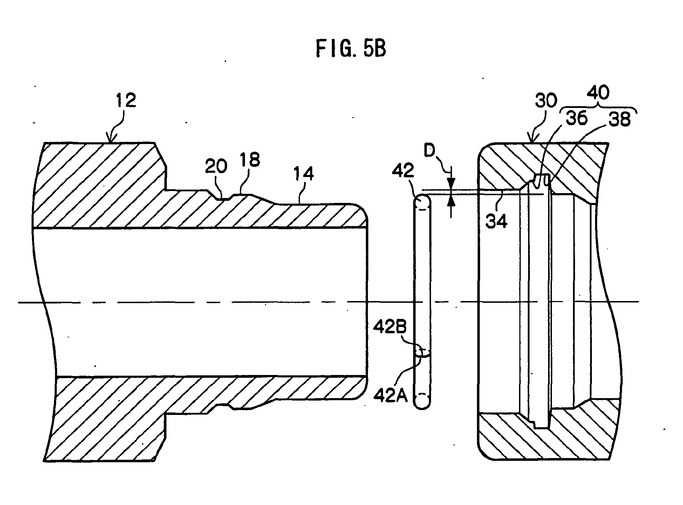

When assembling the pipe fitting 10, the resilient stop ring body 42 is insertion fitted (fitted into) the containing groove 38 of the female body 30. When this is being done, as shown in FIG. 5A and FIG. 5B, force is applied to the resilient stop ring body 42 and the end faces 42A, 42B are made to make contact with each other, shrinking the diameter of the resilient stop ring body 42. Since the outer peripheral diameter of the resilient stop ring body 42 in this state is smaller than the internal diameter of the first inner wall face 34 of the female body 30 (see dimension D) the resilient stop ring body 42 can be inserted to the inside of the first inner wall face 34, and readily inserted up to the location of the two-step groove 40 at the far side of the first inner wall face 34. At the position of the two-step groove 40, contacting of the end faces 42A, 42B of the resilient stop ring body 42 is released and the resilient stop ring body 42 then increases in diameter and returns to its original diameter by elastic force. When this occurs, since the outer peripheral diameter of the resilient stop ring body 42 is greater than the internal diameter of the first inner wall face 34 of the female body 30, the resilient stop ring body 42 is insertion fitted into the two-step groove 40 and is prevented from coming out from the two-step groove 40. Since the outer peripheral diameter of the resilient stop ring body 42 is also greater than the internal diameter of the second circular cylindrical portion 18 of the male body 12, when the resilient stop ring body 42 is insertion fitted (assembled in) the two-step groove 40, the resilient stop ring body 42 is prevented from going further into the back of the female body 30. The resilient stop ring body 42 can thereby be readily assembled in the two-step groove 40 of the female body 30, raising the productivity of the pipe fitting 10.

Namely, in a conventional fitting, since the two end portions of a cut-away in an resilient stop ring body make contact or are in close proximity to each other, a great deal of force is required in order to cross-over the two end portions of the resilient stop ring body. However, in the pipe fitting 10 of the present exemplary embodiment, the diameter shrinking operation and insertion fitting operations of the resilient stop ring body 42 are simple, and the efficiency of the pipe fitting assembly can be raised.

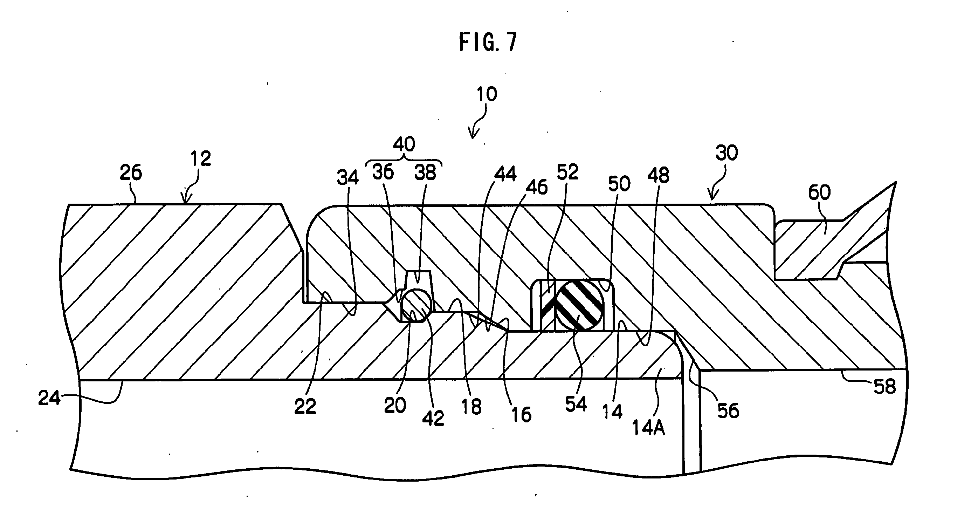

In addition, as shown in FIG 3, when the male body 12 and the female body 30 of the pipe fitting 10 are being joined, a distal end portion 14A of the male body 12 is pushed into the opening 32 of the female body 30. When this is being carried out, since the inner peripheral diameter of the resilient stop ring body 42 is smaller than the outer diameter of the second circular cylindrical portion 18 of the male body 12, the outer tapered portion 16 of the male body 12 contacts the resilient stop ring body 42, and the resilient stop ring body 42 is pushed into the containing groove 38. When the male body 12 is pushed further in, the diameter of the resilient stop ring body 42 widens within the containing groove 38 according to increase of the diameter of the outer tapered portion 16. When the male body 12 continues to be pushed in and the second circular cylindrical portion 18 of the male body 12 passes the containing groove 38, as shown in FIG 7, the resilient stop ring body 42 shrinks in diameter to its original diameter due to its own elastic force and is housed in the annular groove 20 of the male body 12 and in the containing groove 38 of the female body 30, completing joining of the male body 12 and the female body 30. When a liquid flows in this state through the flow paths 24, 58, as shown in FIG 1, due to the increase in pressure, a force acts on the male body 12 to move the male body 12 in the opposite direction to the insertion direction thereof, housing the resilient stop ring body 42 in the locking groove 36 of the female body 30. The inner radius of the female body 30 at the containing groove 38 portion is larger than the sum of the radius of the second circular cylindrical portion 18 and the diameter of the resilient stop ring body 42, and a sum of the depth in the radial direction of the annular groove 20 from the first circular cylindrical portion 22 and the depth in the radial direction of the locking groove 36 from the first inner wall face 34 are formed greater than the diameter of the resilient stop ring body 42, and the resilient stop ring body 42 makes contact with the locking groove 36 and the annular groove 20 of the male body 12. The male body 12 is therefore prevented from coming out from the female body 30, and the joint is maintained under increased pressure. Namely, once the male body 12 and the female body 30 have been joined, the male body 12 and the female body 30 are prevented from separating by the resilient stop ring body 42 being inserted (housed) in the locking groove 36 of the female body 30 and in the annular groove 20 of the male body 12.

When the male body 12 and the female body 30 are joined, since the O-ring 54 also makes contact with the peripheral face of the third circular cylindrical portion 14 of the male body 12, sealing for liquid which flows in the flow paths 24, 58 can also be secured.

In addition, when the male body 12 and the female body 30 are joined, vibration between the both members can be suppressed due to the first circular cylindrical portion 22 of the male body 12 contacting the first inner wall face 34 of the female body 30, the second circular cylindrical portion 18 contacting the second inner wall face 44, and also the third circular cylindrical portion 14 contacting the third inner wall face 48. Also, by provision of the second circular cylindrical portion 18 having a length in the axial direction, even if the second circular cylindrical portion 18 is worn by the resilient stop ring body 42 when under pressure, the life of the pipe fitting 10 can be extended due to the length in the axial direction of the second circular cylindrical portion 18.

Also, as shown in FIG. 6, by setting the angle *θ*1, made between the wall face 36A at the opening 32 side of the locking groove 36 and the axial line of the female body 30, and the angle *θ*2, made between the wall face 20A at the second circular cylindrical portion 18 side of the annular groove 20 and the axial line of the male body 12, within the specific ranges listed above, forces act on the resilient stop ring body 42 in the directions shown by the arrows even as the pressure rises, and the resilient stop ring body 42 is retained in the annular groove 20 of the male body 12 and in the locking groove 36 of the female body 30. The resilient stop ring body 42 is therefore prevented from coming out into the containing groove 38.

The containing groove 50 also houses the ring member 52 formed from resin, at the opening 32 side thereof, and the O-ring 54 made from rubber at the far side thereof, and so the O-ring 54 can be prevented from getting pushed to the opening 32 side between the third inner wall face 48 of the female body 30 and the third circular cylindrical portion 14 of the male body 12, when the pipe fitting 10 is pressurized.

As described above, in the pipe fitting 10 of the present exemplary embodiment, by housing the resilient stop ring body 42 in the locking groove 36 of the female body 30 and in the annular groove 20 of the male body 12, the male body 12 and the female body 30 cannot be separated once the male body 12 and the female body 30 have been joined together. Therefore separation of the male body 12 and the female body 30, due to unintentional separation or vandalism etc., can be prevented. The overall outer diameter and length of the pipe fitting 10 is also small, and the pipe fitting 10 can be made compact, and the number of components is small and reduction in cost can be realized.

Explanation will now be given regarding a second exemplary embodiment of a hose equipped with the pipe fitting which is not according to the present invention but is useful for understanding it. Note that similar parts to those of the first exemplary embodiment are allocated the same reference numerals, and duplication of explanation thereof is omitted.

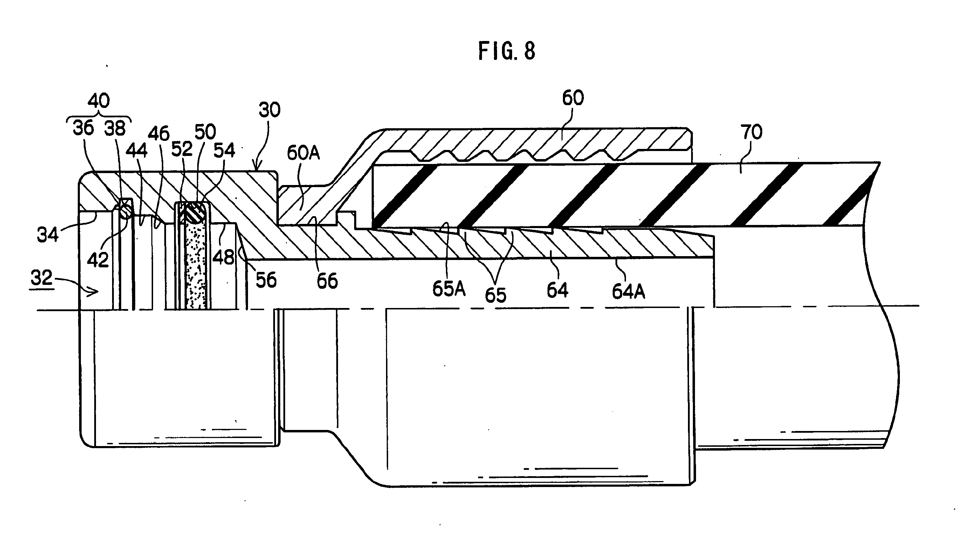

As shown in FIG. 8, a hose connection portion 64 is provided to the female body 30 of the pipe fitting 10 (see FIG. 1), at the opposite side in the length direction to the opening 32. A ring shaped recess 66 is formed in the vicinity of a central portion of the female body 30, between the hose connection portion 64 and the opening 32. A fastening 60 is attached to the female body 30 by a protrusion 60A provided at an end portion of the cylindrical shaped fastening 60 engaging with the recess 66 of the female body 30.

The hose connection portion 64 is a pipe shaped member, with plural projections 65 formed to the outer peripheral face of the hose connection portion 64 to suppress the hose 70 from coming off. A circular shaped opening 64A is formed at the central portion of the hose connection portion 64, such that a liquid can flow along the length direction thereof. The plural projections 65 are equipped with tapered faces 65A that rise in a gradient along the pushing-on direction of the hose 70 (toward the left in the drawing), with corner portions at the top of the tapered faces 65A cutting back substantially orthogonal to the axial direction. The hose connection portion 64 is thereby profiled such that the hose 70 is more easily pushed thereon, and does not readily come off therefrom.

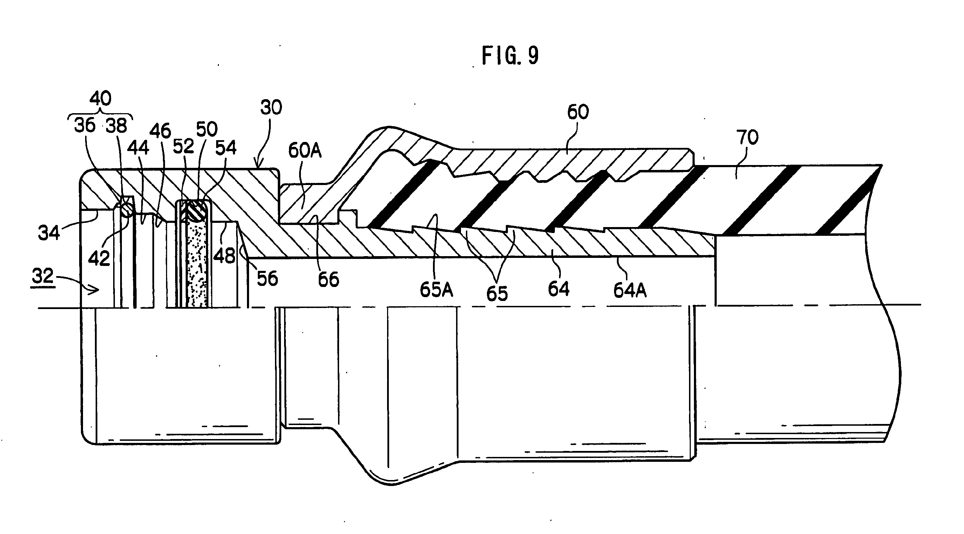

The hose 70 is pushed onto the outer peripheral face of the hose connection portion 64 of the female body 30, and the cylindrical shaped fastening 60 is externally fitted over so as to cover the outside of the hose 70. Then, as shown in FIG. 9, the hose 70 is connected to the hose connection portion 64 by a non-illustrated tightening mechanism tightening the fastening 60 toward the hose connection portion 64 side.

The male body 12 of the pipe fitting (see FIG. 1) is connected to another pipe (not shown in the drawings).

In the present embodiment, since the female body 30 of the pipe fitting 10 is connected to one end portion of the hose 70, the hose 70 can be connected to the other pipe (not shown in the drawings) via the pipe fitting 10 by joining the female body 30 to the male body 12 that is provided to the other pipe (not shown in the drawings). Operability is good when connecting the hose 70, even in restricted space.

Explanation will now be given regarding a third exemplary embodiment of a hose equipped with the pipe fitting which is not according to the present invention but is useful for understanding it. Note that similar parts to those of the first exemplary embodiment and the second exemplary embodiment are allocated the same reference numerals and duplication of explanation thereof is omitted.

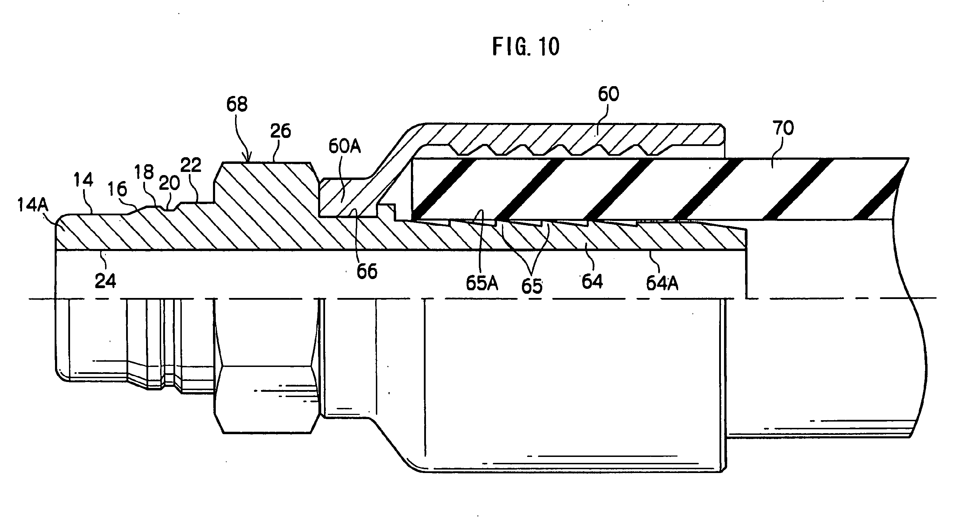

As shown in FIG. 10, a male body 68 of a pipe fitting is provided with a hose connection portion 64 at the opposite side in the length direction to that formed with a first circular cylindrical portion 22, a second circular cylindrical portion 18, a third circular cylindrical portion 14 etc. A ring shaped recess 66 is formed between the base side of the male body 68 (the central portion side) and the hose connection portion 64, and a fastening 60 is attached to the male body 68 by a protrusion 60A of the fastening 60 engaging with the recess 66.

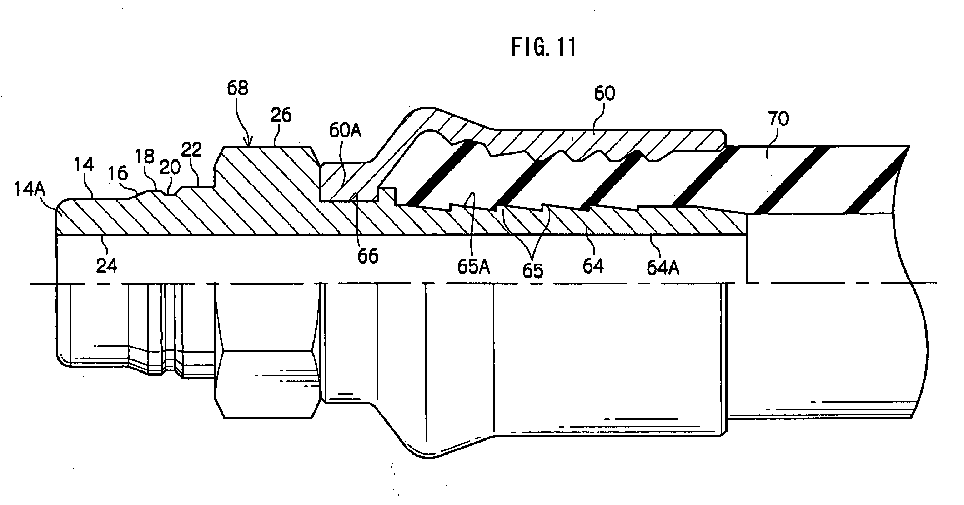

A hose 70 is pushed onto the outer peripheral face of the hose connection portion 64 of the male body 68, and the cylindrical shaped fastening 60 is externally fitted over so as to cover the outside of the hose 70. Then, as shown in FIG. 11, the hose 70 is connected to the hose connection portion 64 of the male body 68 by a non-illustrated tightening mechanism tightening the fastening 60 toward the hose connection portion 64 side. There is another pipe (not shown in the drawings) connected to the female body of the pipe fitting.

In the present embodiment, since male body 68 of the pipe fitting is connected to one end portion of the hose 70, the hose 70 can be connected to the other pipe (not shown in the drawings) via the pipe fitting by joining the male body 68 to the female body that is provided to the other pipe (not shown in the drawings).

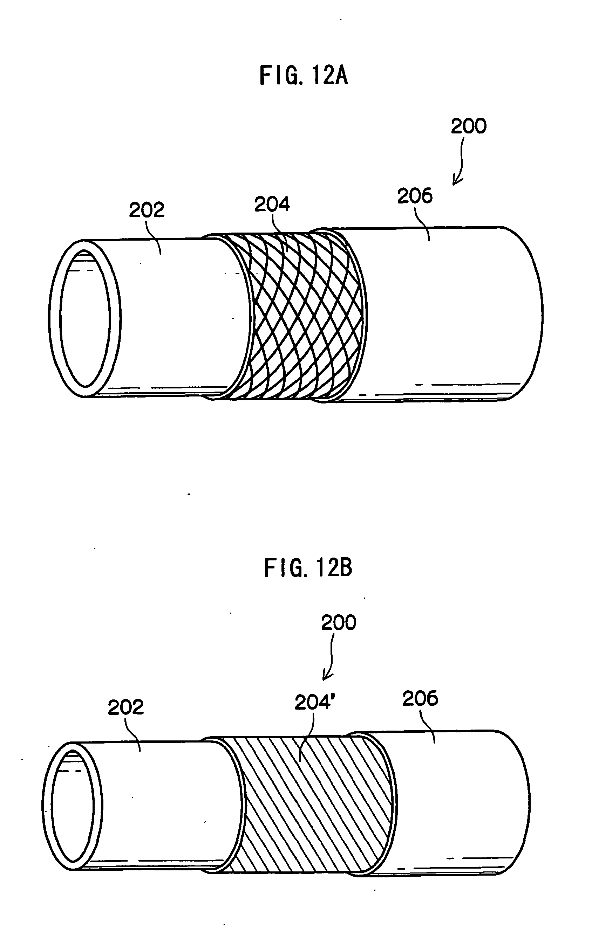

Also, as shown in FIG 12A, a hose 200 may be employed as a hose connected to the male body or the female body of the pipe fitting.

The hose 200 is configured with an inner covering elastomer layer 202, a reinforcement layer 204 that covers the outer face of the inner covering elastomer layer 202 for reinforcement thereof, and also an outer covering elastomer layer 206 that covers the outer face of the reinforcement layer 204.

There are no particular limitations to the materials for the inner covering elastomer layer 202 and the outer covering elastomer layer 206, and a rubber or a urethane can be suitably selected according to the application. However, for example in cases of high pressure hydraulic hoses, an acrylonitrile butadiene rubber (NBR) with excellent oil resistance is preferably employed for the inner covering elastomer layer 202, and a chloroprene rubber (CR) with, in addition to weather durability and oil resistance, excellent particular characteristics in adhesion ability, combustion resistance and the like, is preferably employed for the outer covering elastomer layer 206. CR rubbers are most preferable materials for the outer covering elastomer layer 206 of a hydraulic hose.

The reinforcement layer 204 is formed with reinforcement fibers, made from organic fibers such as vinylon, a polyester (Poly Ethylene Terephthalate (PET), Poly Ethylene Naphthalate (PEN) or the like), a polyamide (nylon), aramid or the like, or from steel wire, in a braided structure or spiral structure (see the reinforcement layer 204' shown in FIG 12B) so as to braid-cover the outer face of the inner covering elastomer layer 202.

While not shown in the drawings, two or more layers of the reinforcement layer 204 (reinforcement layer 204') may be provided, and in such cases an intermediate layer or adhesive layer (adhesive) may be provided between each of the layers as required. An intermediate layer or adhesive layer (adhesive) may also be provided between the reinforcement layer 204 (reinforcement layer 204') and the inner covering elastomer layer 202.

Also, for example in the case of a water supply hose, a polybutene resin, a fluororesin, or a bridged polyethylene resin is preferably employed as the inner covering elastomer layer, and a thermoplastic styrene resin, or a thermoplastic polyolefin resin is preferably employed in a single layer or multi-layer structure as the outer covering elastomer layer.

Reinforcement layer(s) are also formed with reinforcement fibers, made from organic fibers such as vinylon, a polyester (Poly Ethylene Terephthalate (PET), Poly Ethylene Naphthalate (PEN) or the like), a polyamide (nylon), aramid or the like, or from steel wire, in a braided structure or spiral structure so as to braid-cover the outer face of the inner covering elastomer layer.

An intermediate layer or adhesive layer (adhesive) may also be provided between the inner covering elastomer layer and the reinforcement layer, and/or between the reinforcement layer and the outer covering elastomer layer.

Explanation will now be given regarding a pipe fitting of a fourth exemplary embodiment which is not according to the present invention but is useful for understanding it. Note that similar parts to those of the first exemplary embodiment to the third exemplary embodiment are allocated the same reference numerals and duplication of explanation thereof is omitted.

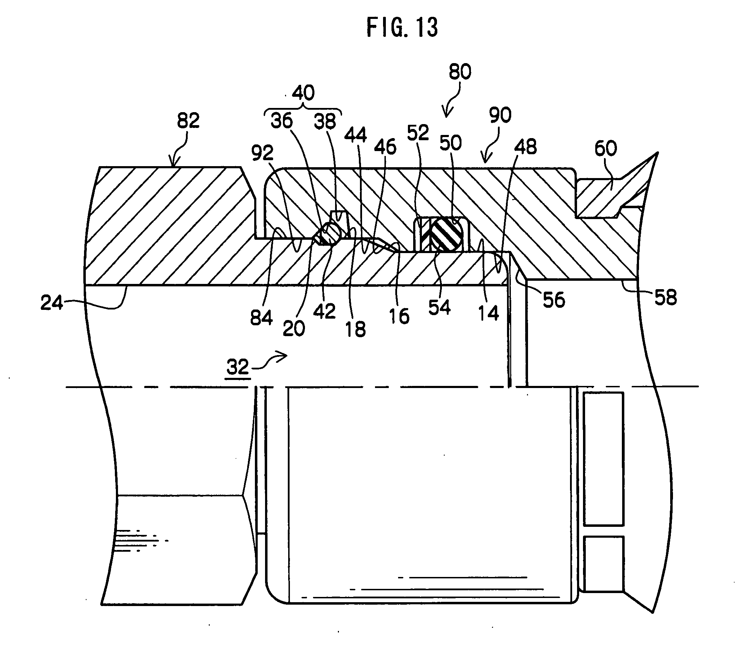

As shown in FIG. 13, a male body 82, configuring a pipe fitting 80, is equipped with, from the distal end toward the base: a third circular cylindrical portion 14; an outer tapered portion 16 at the rear (the base side) of the third circular cylindrical portion 14, sloping toward the outside therefrom; and a second circular cylindrical portion 18 that has a larger outer diameter than the third circular cylindrical portion 14, at the location connecting to the outer tapered portion 16. An annular groove 20 is also formed at the rear of the second circular cylindrical portion 18, the annular groove 20 locking a resilient stop ring body 42 when the male body 82 is inserted toward; and a first circular cylindrical portion 84, formed to the rear of the annular groove 20 and having an outer diameter of about the same diameter as that of the second circular cylindrical portion 18.

The female body 90 configuring the pipe fitting 80 is equipped with: a first inner wall face 92 that corresponds to the first circular cylindrical portion 84 of the male body 82 at the opening 32; a two-step groove 40 having a locking groove 36 at the far side of the first inner wall face 92 housing the resilient stop ring body 42, and an adjacent containing groove 38 into which the resilient stop ring body 42 retreats; and a second inner wall face 44 that corresponds to the second circular cylindrical portion 18 of the male body 82 at the far side of the two-step groove 40. Namely, since the outer diameter of the second circular cylindrical portion 18 and the first circular cylindrical portion 84 are substantially same, the internal diameter of the first inner wall face 92 and the second inner wall face 44 are formed to be of substantially the same diameter as each other. In addition, the female body 90 is formed with an inner tapered portion 46 at the far side of the second inner wall face 44, sloping inward, and a third inner wall face 48 at a position connected to the inner tapered portion 46 and corresponding to the third circular cylindrical portion 14 of the male body 82.

In this pipe fitting 80 too, when the male body 82 is inserted into the opening 32 of the female body 90 and the second circular cylindrical portion 18 of the male body 82 passes the resilient stop ring body 42, the resilient stop ring body 42 shrinks in diameter to its original diameter under its own elastic force, and the resilient stop ring body 42 is housed in the annular groove 20 of the male body 82 and the two-step groove 40 of the female body 90. The resilient stop ring body 42 is thereby prevented from coming out.

The outer peripheral diameter of the resilient stop ring body 42 when shrunk in diameter can be made smaller than the internal diameter of the first inner wall face 92 of the female body 90 by adjusting the dimensions of the gap 43 of the resilient stop ring body 42 (see FIG. 4A and FIG. 4B) etc. The resilient stop ring body 42 can therefore be insertion fitted into the two-step groove 40.

It should be noted that the male body 82 or the female body 90 of the pipe fitting 80 may be utilized connected to an end portion of a hose.

Explanation will now be given regarding a pipe fitting of a fifth exemplary embodiment which is not according to the present invention but is useful for understanding it. Note that similar parts to those of the first exemplary embodiment to the fourth exemplary embodiment are allocated the same reference numerals and duplication of explanation thereof is omitted.

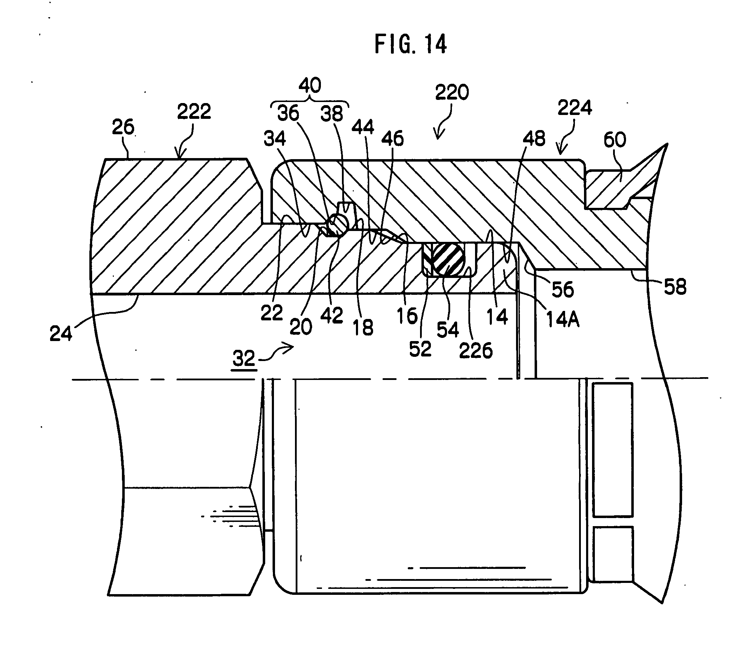

As shown in FIG. 14, a pipe fitting 220 is provided with a containing groove 226 by forming a ring shaped concave portion at the third circular cylindrical portion 14 of a male body 222. The containing groove 226 is formed in a straight-sided U-shape in cross-section. Housed in the containing groove 226 is a ring member 52 disposed at the base side thereof and an O-ring 54 disposed at the distal end side thereof. It should be noted that there is no containing groove for housing the O-ring 54 formed in the third inner wall face 48 of a female body 224.

In the pipe fitting 220 such as above, when the male body 222 and the female body 224 are joined, the O-ring 54 of the male body 222 makes contact with the third inner wall face 48 of the female body 224, hence sealing to a liquid which flows through flow paths 24, 58 can be secured.

In addition, since the ring member 52 is housed in the containing groove 226 at the base side thereof and the O-ring 54 at the distal end side thereof, the O-ring 54 can be prevented by the ring member 52 from being pushed to the opening 32 side between the third inner wall face 48 of the female body 224 and the third circular cylindrical portion 14 of the male body 222 when the pipe fitting 220 is pressurized.

It should be noted that the 222 and/or the female body 224 of the pipe fitting 220 may be utilized connected to an end portion of a hose.

Explanation will now be given regarding a pipe fitting of a sixth exemplary embodiment which is not according to the present invention but is useful for understanding it. Note that similar parts to those of the first exemplary embodiment to the fifth exemplary embodiment are allocated the same reference numerals and duplication of explanation thereof is omitted.

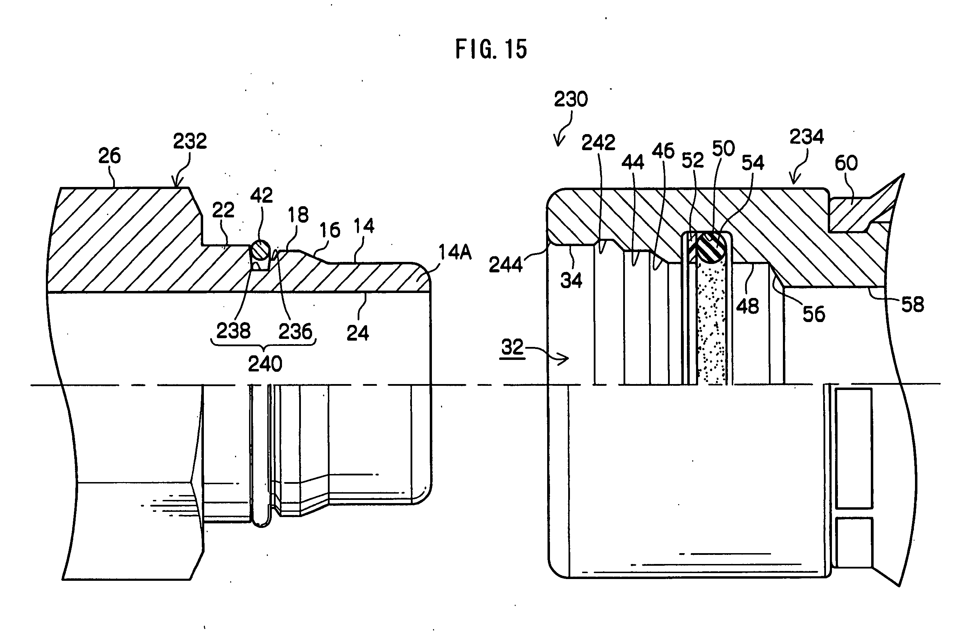

As shown in FIG. 15, a pipe fitting 230 is configured with a male body 232 and a female body 234. The male body 232 is equipped with a two-step groove 240 formed from a locking groove 236, at a location connected to the rear (base side) of a second circular cylindrical portion 18 and an adjacent containing groove 238 at the rear side (base side) of the locking groove 236. A resilient stop ring body 42 is disposed in the two-step groove 240. An annular groove 242 having a substantially trapezoidal profile in cross-section is also provided to a female body 234 at the back (far side) of a first inner wall face 34, the resilient stop ring body 42 being locked by the annular groove 242 when the male body 232 is inserted into the female body 234.

The radius of the male body 232 at the containing groove 238 portion is smaller than a length of the inner radius of the female body 234 at the first inner wall face 34 portion minus the diameter of a cross sectional face of the resilient stop ring body 42, and the sum of the depth in the radial direction of the annular groove 242 from the first inner wall face 34 and the depth in the radial direction of the locking groove 236 from the first circular cylindrical portion 22 is formed greater than the diameter of the cross sectional face of the resilient stop ring body 42. An opening tapered portion 244 is also formed at the end of an opening 32 of the female body 234, the opening tapered portion 244 cut away to give a rounded profile at the inner peripheral side.

The angle made between the wall face at the entrance side of the annular groove 242 and the axial line of the female body 234 is 90° to 30°, and the angle made between the wall face at the distal end side of the locking groove 236 and the axial line of the male body 232 is 90° to 45°. When the angle made between the wall face at the distal end side of the locking groove 236 and the axial line is other than 90° then the angle made between the wall face at the entrance side of the annular groove 242 is set larger than the angle made between the wall face at the distal end side of the locking groove 236 and the axial line.

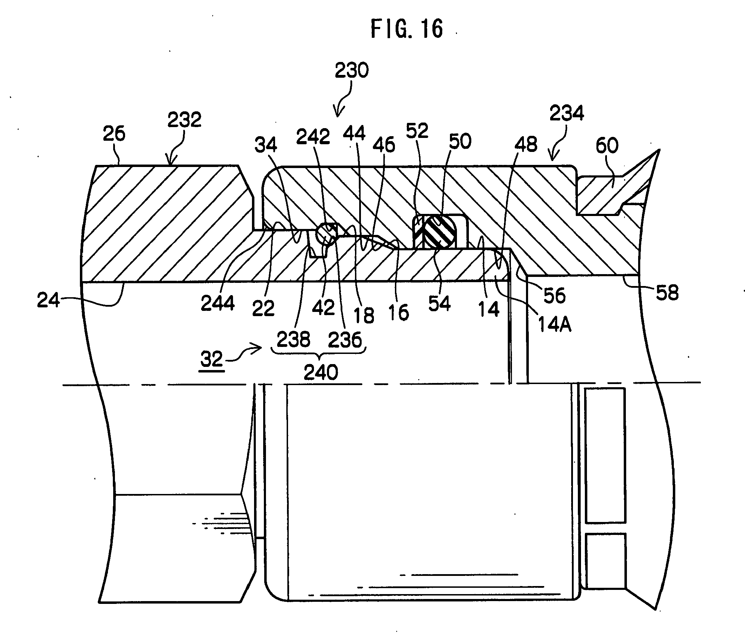

In the pipe fitting 230 such as above, when the distal end portion 14A of the male body 232 is pushed into the opening 32 of the female body 234, the resilient stop ring body 42 contacts the opening tapered portion 244, and the resilient stop ring body 42 shrinks in diameter in the containing groove 238. When pushing in of the male body 232 continues further, the containing groove 238 of the male body 232 passes the first inner wall face 34 of the female body 234 and the resilient stop ring body 42 reaches the annular groove 242 of the female body 234 as shown in FIG. 16, the resilient stop ring body 42 increases in diameter to its original diameter due to its own elastic force, and is housed inside the containing groove 238 of the male body 232 and the annular groove 242 of the female body 234, thereby completing joining of the male body 232 and the female body 234.

When liquid flows through the flow paths 24, 58 in this state, due to the rise in pressure, a force acts on the male body 232 to move the male body 232 in the opposite direction to the insertion direction thereof, housing the resilient stop ring body 42 in the locking groove 236 of the male body 232. When this occurs, the radius at the containing groove 238 portion of the male body 232 is smaller than the length of the inner radius at the first inner wall face 34 portion of the female body 234 minus a diameter of a cross sectional face of the resilient stop ring body 42, and the sum of the depth in the radial direction of the annular groove 242 from the first inner wall face 34 and the depth in the radial direction of the locking groove 236 from the first circular cylindrical portion 22 is formed greater than the diameter of the cross sectional face of the resilient stop ring body 42 therefore, the resilient stop ring body 42 makes contact with the locking groove 236 and with the annular groove 242 of the female body 234. The male body 232 is thereby prevented from coming out from the female body 234, and the joint holds under increased pressure. Vibration between the male body 232 and the female body 234 can also be suppressed since the first circular cylindrical portion 22 of the male body 232 contacts the first inner wall face 34 of the female body 234, the second circular cylindrical portion 18 contacts the second inner wall face 44, and also the third circular cylindrical portion 14 contacts the third inner wall face 48.

In addition, since the angle made between the wall face at the entrance side of the annular groove 242 and the axial line and the angle made between the wall face at the distal end side of the locking groove 236 and the axial line are set within the above ranges, the resilient stop ring body 42 is retained in the locking groove 236 of the male body 232 and the annular groove 242 of the female body 234 even as the pressure rises. Consequently the resilient stop ring body 42 is prevented from coming out from the containing groove 238.

In the pipe fitting 230 such as the above, once the male body 232 and the female body 234 have been joined, separation of the male body 232 and the female body 234 is prevented by the resilient stop ring body 42 being inserted (housed) inside the locking groove 236 of the male body 232 and inside the annular groove 242 of the female body 234. Separation of the male body 232 and the female body 234 due to unintentional separation or vandalism of the like can thereby be prevented.

It should be noted that the male body 232 and/or the female body 234 of the pipe fitting 230 may be utilized connected to one end of a hose.

Explanation will now be given of a pipe fitting of a seventh exemplary embodiment which is not according to the present invention but is useful for understanding it. Note that similar parts to those of the first exemplary embodiment to the sixth exemplary embodiment are allocated the same reference numerals and duplication of explanation thereof is omitted.

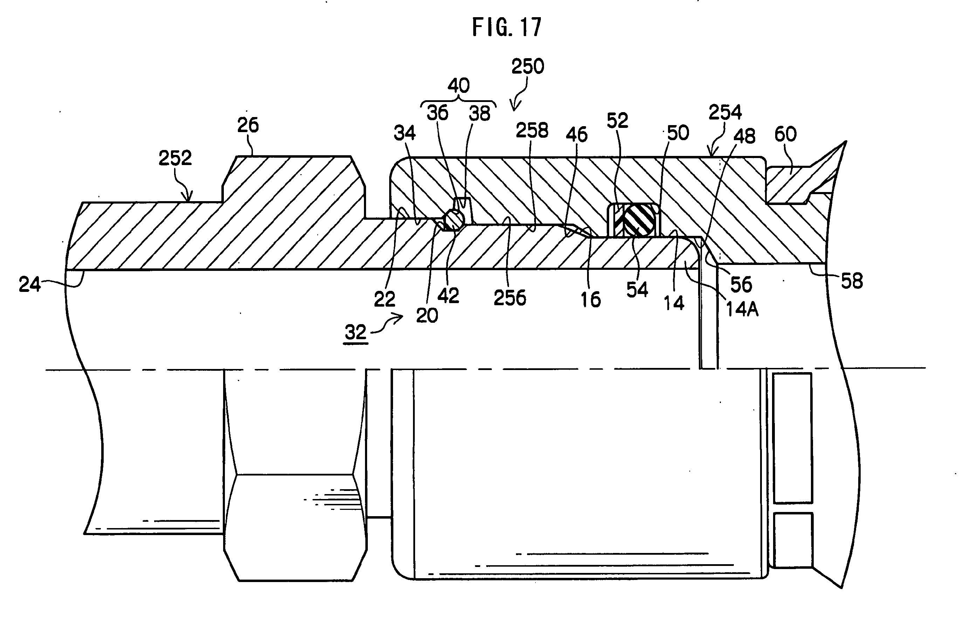

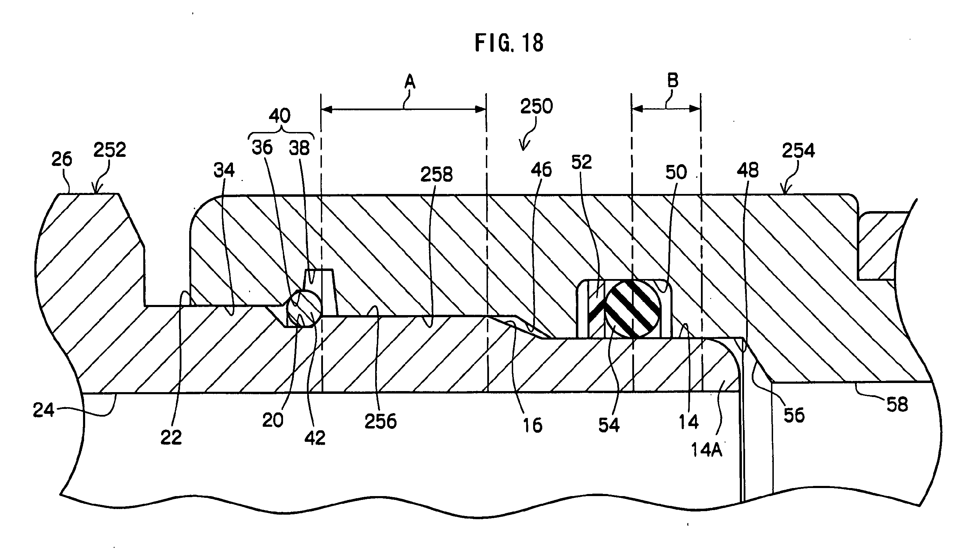

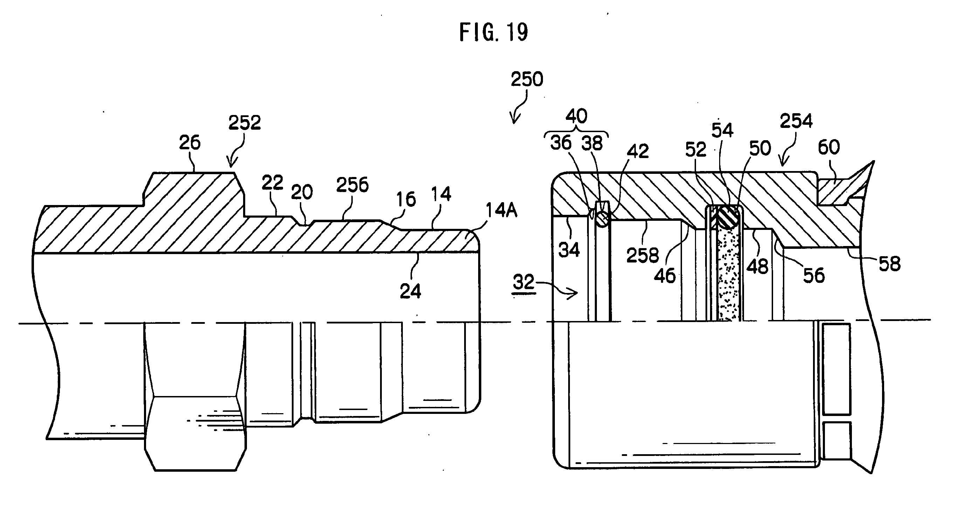

FIG. 17 is a cross-section cut in half showing a joined state of a pipe fitting 250 of the seventh exemplary embodiment, and FIG. 18 is an expanded view of a portion of the pipe fitting 250. FIG. 19 is a cross-section cut in half showing a state of separation of the pipe fitting 250.

The pipe fitting 250 is configured from a circular cylindrical shaped male body 252, and a circular cylindrical shaped female body 254 into which the male body 252 is inserted. As shown in FIG. 17 and FIG. 19, the male body 252 is of small diameter at the distal end side in the length direction thereof, and is equipped with, from the distal end toward the base: a third circular cylindrical portion 14; an outer tapered portion 16 at a location at the rear side (center portion side) of the third circular cylindrical portion 14, sloping toward the outside; and a second circular cylindrical portion 256 at a location connecting to the rear of the outer tapered portion 16, having a larger outer diameter than the third circular cylindrical portion 14. The male body 252 is also equipped with: an annular groove 20 locks a resilient stop ring body 42, serving as a resilient ring shaped stopping member, when the male body 252 is inserted into the female body 254; and a first circular cylindrical portion 22 at a location connected to the rear of the annular groove 20, having an outer diameter larger than that of the second circular cylindrical portion 256. A circular shaped flow path 24 through which a liquid flows is provided at the core portion of the male body 252. A hexagonal portion 26 for applying a spanner thereto is provided at the rear of the first circular cylindrical portion 22 (at the central portion side) of the male body 252. A rounded profile is also formed to the outer peripheral side of a distal end portion 14A of the male body 252.

As shown in FIG. 18 and FIG. 19, the female body 254 is equipped with the opening 32 into which the male body 252 is inserted, the entry side of the opening 32 is equipped with a first inner wall face 34 that corresponds to the first circular cylindrical portion 22 of the male body 252. The female body 254 is also provided with a two-step groove 40, formed with a locking groove 36 and a containing groove 38. The locking groove 36 is formed at the back side (far side) of the first inner wall face 34, in which the resilient stop ring body 42, serving as a resilient ring shaped stopping member, is housed when the male body 252 and the female body 254 are joined. The containing groove 38 is formed at the back side of the locking groove 36, into which the resilient stop ring body 42 retreats during the joining operation. In addition the female body 254 is equipped with: a second inner wall face 258, at a location connecting to the back side of the two-step groove 40 and corresponding to the second circular cylindrical portion 256 of the male body 252; an inner tapered portion 46 that slopes inward toward the back direction from the second inner wall face 258; and a third inner wall face 48 at a location connecting to the back side of the inner tapered portion 46, corresponding to the third circular cylindrical portion 14 of the male body 252. A containing groove 50 is also formed at the third inner wall face 48 of the female body 254. A ring member 52 made from resin and an O-ring 54 made from rubber, serving as a resilient ring shaped seal member, are housed in the containing groove 50.

In addition, a wall face 56 is formed at the furthermost portion of the opening 32 of the female body 254, connected to a flow path 58 through which a liquid flows at the core of the female body 254. A fastening 60, for connecting a hose, is provided at the opposite side to that of the opening 32 of the female body 254 in the length direction. The resilient stop ring body 42 is formed from a ring shaped member having a circular cross-sectional face, and a gap (not shown in the drawings) is formed as a cut-away portion in the ring shaped member. The resilient stop ring body 42 is thereby capable of shrinking in diameter by resilient deformation from the free state thereof. The resilient stop ring body 42 is pre-housed in the two-step groove 40 of the female body 254 during assembly of the pipe fitting 250.

As shown in FIG 18, the pipe fitting 250 is formed so that the relationship A> B is satisfied, where A is the length in the axial direction of the second circular cylindrical portion 256 of the male body 252, and B is the length in the axial direction from the distal end of the portion of uniform outer diameter of the third circular cylindrical portion 14 up to the rear (rear end at the base side of the male body 252) of the portion where the O-ring 54 makes contact with the third circular cylindrical portion 14. In cases where there is a gap so that the O-ring 54 can move in the axial direction within the containing groove 50, the length B is defined as the length measured when the O-ring 54 is positioned biased to the furthest side (back side) of the female body 254. The pipe fitting 250 is formed from materials such that the hardness of the female body 254 is greater than the hardness of the male body 252. Metals, such as steel, are used as materials for the female body 254 and the male body 252.

Explanation will now be given of the operation of the pipe fitting 250.

As shown in FIG 19, in order to join the male body 252 and the female body 254 of the pipe fitting 250, the distal end portion 14A of the male body 252 is pushed into the opening 32 of the female body 254. When this is being carried out, the outer tapered portion 16 of the male body 252 contacts the resilient stop ring body 42, pushing the resilient stop ring body 42 into the containing groove 38. When the male body 252 is pushed in further, the diameter of the resilient stop ring body 42 in the containing groove 38 increases, as the diameter of the outer tapered portion 16 widens. When the male body 252 continues to be pushed in and the second circular cylindrical portion 256 of the male body 252 passes the containing groove 38, as shown in FIG 17, the resilient stop ring body 42 shrinks in diameter to its original diameter due to its own elastic force, being housed in the annular groove 20 of the male body 252 and in the containing groove 38 of the female body 254, and completing joining of the male body 252 and the female body 254. When a liquid flows in this state through the flow paths 24, 58, due to the increase in pressure, a force acts on the male body 252 to move the male body 252 in the opposite direction to the insertion direction thereof, housing the resilient stop ring body 42 in the locking groove 36 of the female body 254, and the joining of the pipe fitting 250 is maintained under increased pressure due to the resilient stop ring body 42 being locked in the locking groove 36 and in the annular groove 20 of the male body 252.

In such cases, the O-ring 54 makes contact with the peripheral face of the third circular cylindrical portion 14 of the male body 252, and so a sealing of liquid which flows in the flow paths 24, 58 is secured. In addition, since the resilient stop ring body 42 is housed in the locking groove 36 of the female body 254 and in the annular groove 20 of the male body 252, configuration is made such that the male body 252 and the female body 254 cannot be separated once the male body 252 and the female body 254 have been joined.

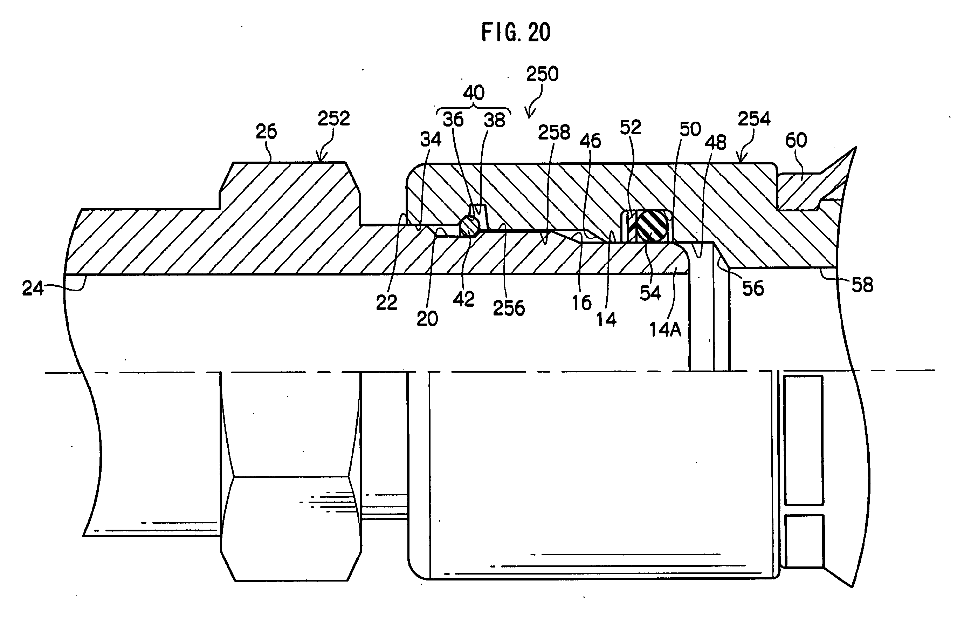

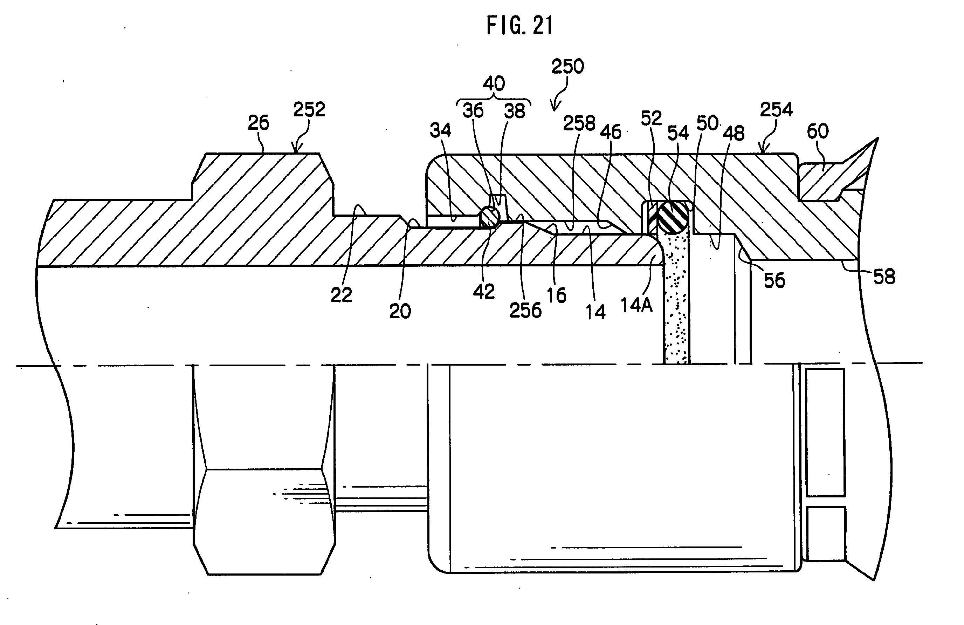

In the pipe fitting 250, the hardness of the female body 254 is greater than the hardness of the male body 252, and so wear of the male body 252 progresses during joining due to rotation of the male body 252 and the female body 254, while wear of the female body 254 is suppressed. As shown in FIG 20, when the male body 252 and the female body 254 rotate, a portion at the annular groove 20 side of the second circular cylindrical portion 25 of the male body 252 is worn away by the resilient stop ring body 42, and the male body 252 gradually moves toward the direction that the male body 252 comes out from the female body 254. When this is occurring, since the relationship A> B is satisfied, where A is the length in the axial direction of the second circular cylindrical portion 256 of the male body 252, and B is the length in the axial direction from the distal end of the portion of uniform outer diameter of the third circular cylindrical portion 14 up to the portion where the O-ring 54 makes contact with the third circular cylindrical portion 14. Therefore, as shown in FIG 21, even as wear of the second circular cylindrical portion 256 of the male body 252 progresses, the O-ring 54 comes away from the containing groove 50 at the third circular cylindrical portion 14, while there is still some of the wear allowance of the second circular cylindrical portion 256 remaining. Therefore, the end of life of the pipe fitting 250 can be detected by leaking out of liquid before the male body 252 comes out from the female body 254.

It should be noted that the male body 252 and/or the female body 254 of the pipe fitting 250 may be utilized connected to one end of a hose.

Explanation will now be given regarding a pipe fitting of an eighth exemplary embodiment, which is according to the present invention. Note that similar parts to those of the first exemplary embodiment to the seventh exemplary embodiment are allocated the same reference numerals, and duplication of explanation thereof is omitted.

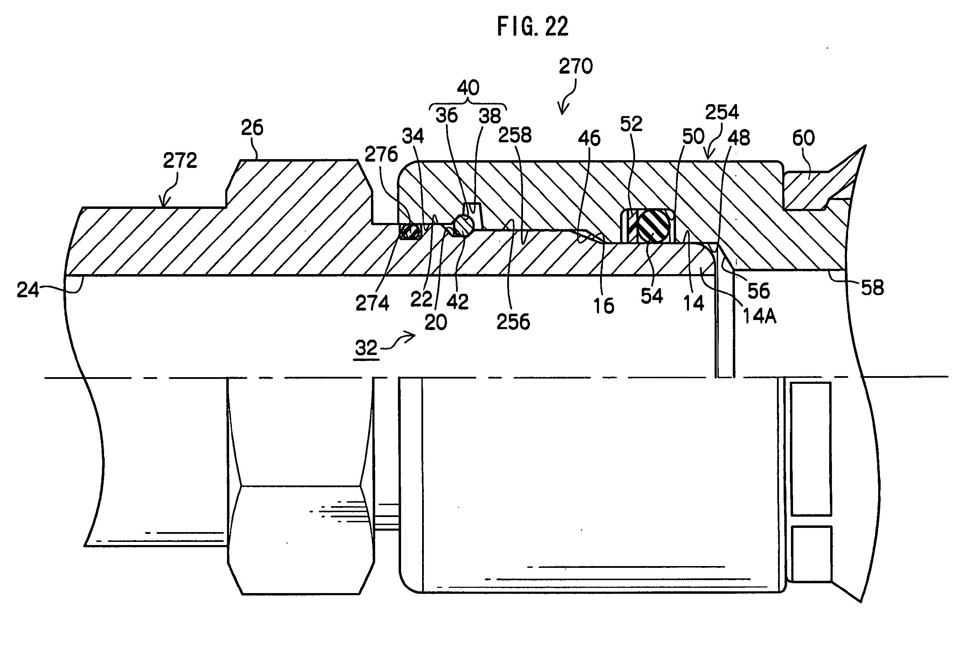

As shown in FIG. 22, a pipe fitting 270 has an annular groove 274 formed at a first circular cylindrical portion 22 of a male body 272, corresponding to a first inner wall face 34 of a female body 254, and a ring shaped dust seal 276 is housed in the annular groove 274.

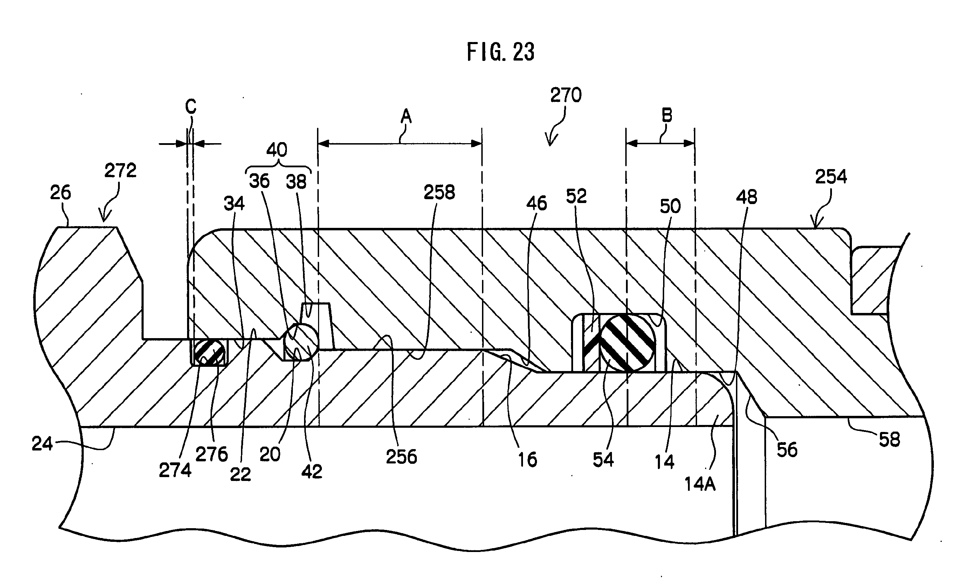

As shown in FIG. 23, the pipe fitting 270 is formed such that the relationship A > B > C is satisfied, where A is the length in the axial direction of the second circular cylindrical portion 256 of the male body 272, B is the length in the axial direction from the distal end of the portion of uniform outer diameter of a third circular cylindrical portion 14 to the rear end (the rear end on the male body 272 base side) of the portion where an O-ring 54 makes contact with the third circular cylindrical portion 14, and C is the length in the axial direction from the distal end at an entrance side of the first inner wall face 34 of the female body 254 to the end portion at the entrance side (end portion at the rear side of the male body 272) of the dust seal 276. When there is a gap for movement of the dust seal 276 along the axial direction in the annular groove 274, the measurement of the length C here is the length when the dust seal 276 is positioned biased furthest to the third circular cylindrical portion 14 side (the far side of the opening 32 of the female body 254) of the male body 272. The dust seal 276 is formed from, for example, black colored rubber, so as to act as a marker when exposed from the distal end portion of the female body 254.

Explanation will now be given of the operation of the pipe fitting 270.

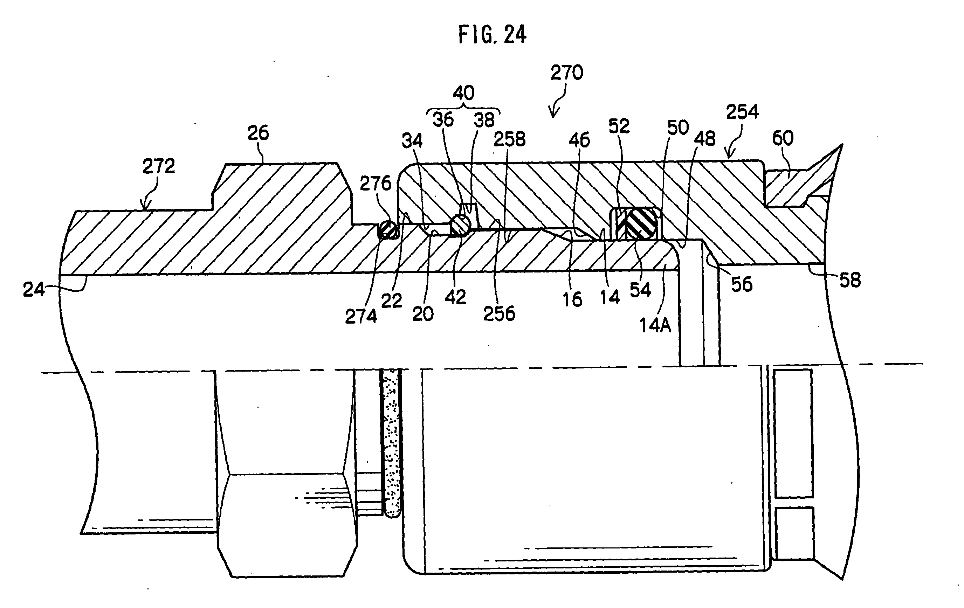

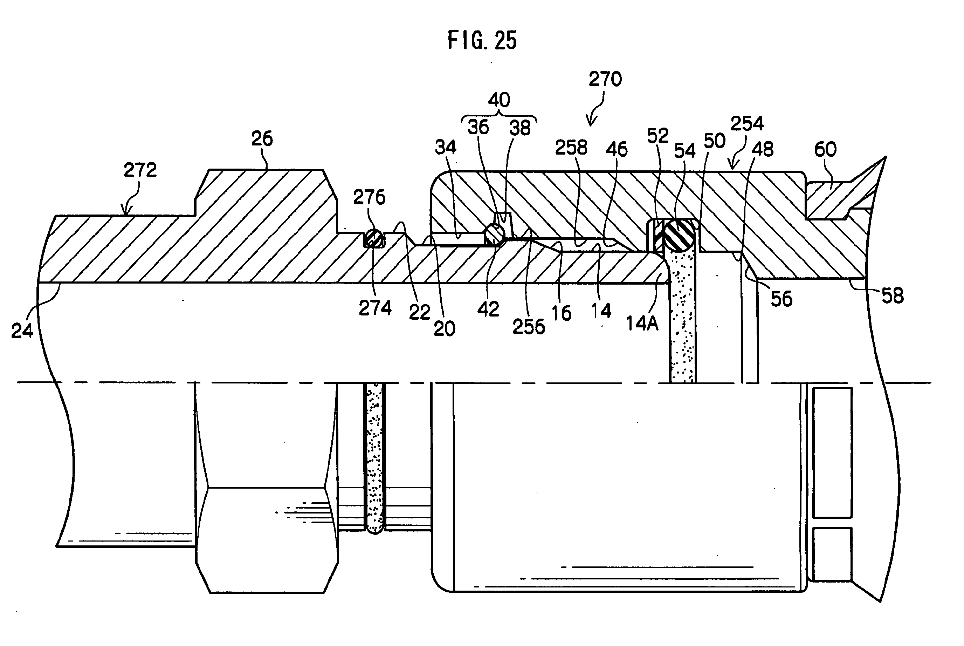

When the pipe fitting 270 is joined and the male body 272 and the female body 254 rotate, as shown in FIG. 24, a portion at the annular groove 20 side of the second circular cylindrical portion 256 of the male body 272 is worn away by the resilient stop ring body 42, and the male body 272 gradually moves toward the direction that the male body 272 comes out from the female body 254. When this is occurring, since the relationship A > B > C is satisfied (see FIG. 23), where A is the length in the axial direction of the second circular cylindrical portion 256 of the male body 272, B is the length in the axial direction from the distal end of the portion of uniform outer diameter of the third circular cylindrical portion 14 up to the rear end of the portion where the O-ring 54 makes contact with the third circular cylindrical portion 14, and C is the length in the axial direction from the distal end at an entrance side of the first inner wall face 34 of the female body 254 to the end portion at the entrance side (end portion at the rear side of the male body 272) of the dust seal 276. As wear of the second circular cylindrical portion 256 of the male body 272 progresses, the dust seal 276 becomes exposed from the distal end portion of the female body 254 due to the movement of the male body 272. When this has been occurred, the sealing is secured by the second circular cylindrical portion 256 and the O-ring 54. That is, when the end of the life of the pipe fitting 270 is near, this can be detected by the dust seal 276 exposed from the female body 254, enabling the pipe fitting 270 to be replaced before the male body 272 comes out. As shown in FIG 25, as the wear of the second circular cylindrical portion 256 of the male body 272 further progresses, the O-ring 54 comes away from the containing groove 50 at the third circular cylindrical portion 14 of the male body 272, while there is still some wear allowance of the second circular cylindrical portion 256 remaining. Liquid leakage therefore occurs before the male body 272 comes out from the female body 254, and so the end of life of the pipe fitting 270 can be detected.

In addition, since in the pipe fitting 270, the dust seal 276 provided to the annular groove 274 of the male body 272 makes contact with the first inner wall face 34 of the female body 254, foreign matter, such as sand or the like, can be suppressed from entering between the first circular cylindrical portion 22 of the male body 272 and the first inner wall face 34 of the female body 254. Progression in wear of the male body 272 due to foreign matter can therefore be suppressed.

In addition, by providing the dust seal 276 at the overlapping portion of the male body 272 and the distal end of the female body 254, not only is there functionality for notifying the wear of the male body 272, but also completion of insertion (joining) of the male body 272 into the female body 254 can be confirmed.

It should be noted that the male body 272 and/or the female body 254 of the pipe fitting 270 can be utilized connected to one end of a hose.

Explanation will now be given regarding a pipe fitting of a ninth exemplary embodiment. Note that similar parts to those of the first exemplary embodiment to the eighth exemplary embodiment are allocated the same reference numerals and duplication of explanation thereof is omitted.

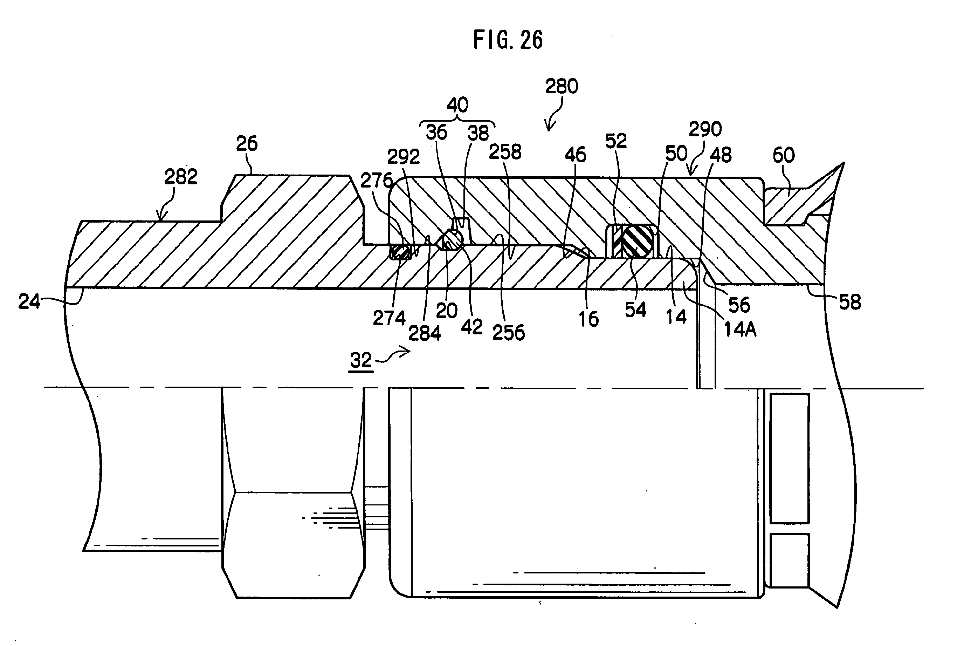

As shown in FIG 26, a male body 282 configuring a pipe fitting 280 is equipped, from the distal end, with: a third circular cylindrical portion 14; a outer tapered portion 16 that slopes outward from the rear (central portion side) of the third circular cylindrical portion 14; and a second circular cylindrical portion 256 that has an outer diameter greater than the third circular cylindrical portion 14 at a location connected to the outer tapered portion 16. An annular groove 20 is also formed at the rear of the second circular cylindrical portion 256, locking a resilient stop ring body 42 when the male body 282 is inserted, and a first circular cylindrical portion 284 is formed at the rear of the resilient stop ring body 42, the first circular cylindrical portion 284 having an outer diameter substantially the same as that of the second circular cylindrical portion 256. An annular groove 274 is formed at the first circular cylindrical portion 284, and a ring shaped dust seal 276 is housed in the annular groove 274.

A female body 290 configuring the pipe fitting 280 is equipped with: a first inner wall face 292 at the entry side of the opening 32, corresponding to the first circular cylindrical portion 284; a two-step groove 40, formed from a locking groove 36 at the back side from the first inner wall face 292 and housing a resilient stop ring body 42 and an adjacent containing groove 38 into which the resilient stop ring body 42 retreats; and, at the back side of the two-step groove 40, a second inner wall face 258 that corresponds to the second circular cylindrical portion 256 of the male body 282. Namely, since the outer diameter of the second circular cylindrical portion 256 and the first circular cylindrical portion 284 are substantially the same as each other, the internal diameter of the first inner wall face 292 and the second inner wall face 258 are formed substantially the same as each other. The female body 290 is also equipped with an inner tapered portion 46 sloping inward from the back side of the second inner wall face 258, and, at a location connected to the inner tapered portion 46, a third inner wall face 48 that corresponds with the third circular cylindrical portion 14 of the male body 282.

In the pipe fitting 280 too, when wear of the second circular cylindrical portion 256 of the male body 282 progresses, the dust seal 276 becomes exposed from the distal end of the female body 254 due to movement of the male body 282. Thereby, when the end of the life of the pipe fitting 280 is near, this can be detected, enabling the pipe fitting 280 to be replaced before the male body 282 comes out. In addition, as wear of the second circular cylindrical portion 256 of the male body 282 progresses, the O-ring 54 separates from the containing groove 50 at the third circular cylindrical portion 14 of the male body 282 in a state in which there is still some wear allowance of the second circular cylindrical portion 256 of the male body 282 remaining. Therefore the end of life of the pipe fitting 280 can be detected by leakage of liquid before the male body 282 comes out from the female body 290. Foreign matter, such as sand or the like, can also be suppressed from entering between the first circular cylindrical portion 284 of the male body 282 and the first inner wall face 292 of the female body 290, and completion of insertion (joining) can be confirmed when the male body 282 is being inserted into the female body 290.

It should be noted that while a ring shaped dust seal 276 made from rubber is provided in the eighth and ninth exemplary embodiments, there is no limitation thereto, and a marker of another material or shape may be provided.

It should be noted that the male body 282 and/or the female body 290 of the pipe fitting 280 may be utilized connected to one end of a hose.

It should be noted that while the resilient stop ring body 42 in the above first to ninth exemplary embodiments is of circular shaped cross-sectional face, there is no limitation thereto, and another shape, such as a rectangular shape with rounded faces, in cross-section, may be employed.

Explanation of the Reference Numerals
- 10: pipe fitting
- 12: male body
- 14: third circular cylindrical portion
- 14A: distal end portion
- 16: outer tapered portion
- 18: second circular cylindrical portion
- 20: annular groove
- 20A: wall face
- 22: first circular cylindrical portion
- 30: female body
- 32: opening
- 34: first inner wall face
- 36: locking groove
- 36A: wall face
- 38: containing groove
- 40: two-step groove
- 42: resilient stop ring body (resilient ring shaped stopping member)
- 43: gap
- 44: second inner wall face
- 46: inner tapered portion
- 48: third inner wall face
- 50: containing groove
- 54: O-ring (resilient ring shaped seal member)
- 68: male body
- 70: hose
- 80: pipe fitting
- 82: male body
- 84: first circular cylindrical portion
- 90: female body
- 92: first inner wall face
- 200: hose
- 202: inner covering elastmer layer
- 204: reinforcement layer
- 204A: wire
- 206: outer covering elastmer layer
- 208: reinforcement layer
- 208A, 208B: wire
- 210: hose
- 220: pipe fitting
- 222: male body
- 224: female body
- 226: containing groove
- 230: pipe fitting
- 232: male body
- 234: female body
- 236: locking groove
- 238: containing groove
- 240: two-step groove
- 242: annular groove
- 244: opening tapered portion
- 250: pipe fitting
- 252: male body
- 254: female body
- 256: second circular cylindrical portion
- 258: second inner wall face
- 270: pipe fitting
- 272: male body
- 274: annular groove
- 276: dust seal
- 280: pipe fitting
- 282: male body
- 284: first circular cylindrical portion
- 290: female body
- 292: first inner wall face

## Claims

1. A pipe fitting (230, 270) equipped with a circular cylindrical shaped male body(232, 272), a circular cylindrical shaped female body (234, 254) into which the male body (232, 272) is inserted, and a resilient ring shaped stopping member (42) that locks and joins the male body (232, 272) and the female body (234, 254), wherein:
(a) the male body (232, 272) has, from a base end thereof toward a distal end thereof, a first circular cylindrical portion (22), a second circular cylindrical portion (18, 256) having an outer diameter that is the same as that of the first circular cylindrical portion (22) or an outer diameter that is smaller than that of the first circular cylindrical portion (22), and an outer tapered portion that slopes inward from the second circular cylindrical portion (18, 256);
wherein:
(1) the male body (272) is also equipped with an annular groove (20) between the first circular cylindrical portion (22) and the second circular cylindrical portion (256); the female body (254) has, from an opening into which the male body (272) is inserted toward the inside, when the male body (272) has been inserted, a first inner wall face (34) that makes contact with the first circular cylindrical portion (22), a second inner wall face (258) that makes contact with the second circular cylindrical portion (256), and an inner tapered portion (46) that slopes inward from the second inner wall face (258);
the female body (254) is also equipped with a two-step groove (40) between the first inner wall face (34) and the second inner wall face (258), the two-step groove (40) being formed from a locking groove (36) at the opening side thereof and an adjacent containing groove (38) at the inside thereof, and the resilient ring shaped stopping member (42) is disposed in the two-step groove (40);
the inner radius of the female body (254) at a portion where the containing groove (40) is formed being longer than the length of the sum of the radius of the second circular cylindrical portion (256) and the diameter of a cross sectional face of the resilient ring shaped stopping member (42), and the depth of the annular groove (40) in a radial direction of the male body (272) from the first circular cylindrical portion (22) and the depth of the locking groove (40) in a radial direction of the female body (254) from the first inner wall face (34) are formed greater than the diameter of the cross sectional face of the resilient ring shaped stopping member (42); or
(2) the male body (232) is also equipped with a two-step groove (240) between the first circular cylindrical portion (22) and the second circular cylindrical portion, the two-step groove (240) being formed from a locking groove (236) at the distal end side thereof in which the resilient ring shaped stopping member (42) is disposed, and an adjacent containing groove (238) at the base end side thereof;
the female body (234) has, from an opening into which the male body (232) is inserted toward the inside, an opening taper portion (244) formed at a distal end, a first inner wall face (34) that makes contact with the first circular cylindrical portion (22) when the male body (232) has been inserted, a second inner wall face (44) that makes contact with the second circular cylindrical portion (18) when the male body (232) has been inserted, and an inner tapered portion (46) that slopes inward from the second inner wall face (44);
the female body (234) is also equipped with an annular groove (242) between the first inner wall face (34) and the second inner wall face (44);
the inner radius of the male body (232) at a portion where the containing groove (238) is formed being smaller than the length of the radius of the first inner wall face (34) minus the diameter of a cross sectional face of the resilient ring shaped stopping member (42), and the sum of the depth of the annular groove (242) in a radial direction of the female body (234) from the first inner wall face (34) and the depth of the locking groove (236) in a radial direction of the male body (232) from the first circular cylindrical portion (22) is formed greater than the diameter of the cross sectional face of the resilient ring shaped stopping member (42);
(b) the resilient ring shaped stopping member (42) has a gap formed as a cut-away portion from a ring shape, with the inner peripheral diameter of the resilient ring shaped stopping member (42) being smaller than the outer diameter of the second circular cylindrical portion (18, 256),
the male body (232, 272) has a third circular cylindrical portion (14) at the distal end side of the outer tapered portion (16);
the female body (234, 254) has at the inside of the inner tapered portion (46) a third inner wall face (48) that makes contact with the third circular cylindrical portion (14) when the male body (232, 272) has been inserted; and
a seal member containing groove (50) that houses a resilient ring shaped seal member (54) for sealing a liquid is provided to the third inner wall face (48) or to the third circular cylindrical portion (14), or across both the third inner wall face (48) and the third circular cylindrical portion (14);
**characterised in that**:
a marker (276) is provided at the first circular cylindrical portion (22), the marker (276) contacting the first inner wall face (34) when the male body (232, 272) and the female body (234, 254) are joined;
the marker (276) is a ring shaped dust seal, and the dust seal is housed in an annular groove (274) formed at the first circular cylindrical portion (22); and
the relationship A> B > C is satisfied where A is the length in the axial direction of the second circular cylindrical portion (18, 256), B is the length in the axial direction from the distal end of a portion having an uniform outer diameter of the third circular cylindrical portion (14) to the end at the base side of a contact portion between the resilient ring shaped seal member and the third circular cylindrical portion (14), and C is the length in the axial direction from the end at the opening side of the first inner wall face (34) to the end portion at the opening side of the marker (276).

2. The pipe fitting (270, 230) according to claim 1, wherein the resilient ring shaped stopping member (42) is formed with an outer peripheral diameter that is larger than the internal diameter of the first inner wall face (34) and smaller than the internal diameter of the locking groove (20, 242), and the outer peripheral diameter of the resilient ring shaped stopping member (42) when both end portions (42A, 42B) thereof make contact with each other is smaller than the internal diameter of the first inner wall face (34) and larger than the internal diameter of the second inner wall face (44).

3. The pipe fitting (270) of claim 1, when (1) is the case, wherein the angle made between the wall face at the distal end side of the annular groove (20) and an axial line of the pipe fitting is 90° to 30°, and the angle made between the wall face at the opening side of the locking groove (36) and the axial line of the pipe fitting is 90° to 45°.

4. The pipe fitting (230) of claim 1, when (2) is the case, wherein the angle made between the wall face at the opening end side of the annular groove (242) and an axial line of the pipe fitting is 90° to 30°, and the angle made between the wall face at the distal end side of the locking groove (236) and the axial of the pipe fitting line is 90° to 45°.

5. The pipe fitting (230) of claim 1, wherein the hardness of the female body (234, 254) is greater than the hardness of the male body (232, 272).

6. A hose (60) with the pipe fitting (270, 230) of any one of claim 1 to claim 5, wherein the male body (272, 232) alone or the female body (254, 254) alone is provided to one end of the hose (60), or two male bodies, two female bodies, or one male body and one female body are provided at the both ends of the hose (60).

7. The hose (200) with the pipe fitting of claim 6, wherein:
the female body (254) of the pipe fitting (270) is at least at the one end of the hose; and
the hose (200) has an internal face layer (202), reinforcement layer (204) at the outside of the internal face layer, and an outer face layer (206) at the outside of the reinforcement layer (204).

8. The hose (200) with the pipe fitting of claim 6 or claim 7, wherein the reinforcement layer (204) has metal wire meshing or metal wire wound therein.

## Patentansprüche

1. Rohranschlussstück (230, 270), das mit einem kreisförmigen, zylindrisch geformten männlichen Körper (232, 272), einem kreisförmigen, zylindrisch geformten weiblichen Körper (234, 254), in den der männliche Körper (232, 272) eingesetzt wird, und einem elastischen ringförmigen Anschlagelement (42) ausgestattet ist, das den männlichen Körper (232, 272) und den weiblichen Körper (234, 254) verriegelt und verbindet, wobei:
(a) der männliche Körper (232, 272) von einem Basisende davon in Richtung eines distalen Endes davon aufweist: einen ersten kreisförmigen, zylindrischen Abschnitt (22); einen zweiten kreisförmigen, zylindrischen Abschnitt (18, 256) mit einem Außendurchmesser, der der gleiche ist wie der des ersten kreisförmigen, zylindrischen Abschnittes (22) oder einem Außendurchmesser, der kleiner ist als der des ersten kreisförmigen, zylindrischen Abschnittes (22); und einen äußeren kegelförmigen Abschnitt, der sich nach innen vom zweiten kreisförmigen, zylindrischen Abschnitt (18, 256) neigt;
worin:
(1) der männliche Körper (272) ebenfalls mit einer Ringnut (20) zwischen dem ersten kreisförmigen, zylindrischen Abschnitt (22) und dem zweiten kreisförmigen, zylindrischen Abschnitt (256) ausgestattet ist; der weibliche Körper (254) von einer Öffnung aus, in die der männliche Körper (272) in Richtung der Innenseite eingesetzt wird, wenn der männliche Körper (272) eingesetzt wurde, eine erste Innenwandfläche (34), die einen Kontakt mit dem ersten kreisförmigen, zylindrischen Abschnitt (22) herstellt, eine zweite Innenwandfläche (258), die einen Kontakt mit dem zweiten kreisförmigen, zylindrischen Abschnitt (256) herstellt, und einen inneren kegelförmigen Abschnitt (46) aufweist, der sich nach innen von der zweiten Innenwandfläche (258) neigt; der weibliche Körper (254) ebenfalls mit einer zweistufigen Nut (40) zwischen der ersten Innenwandfläche (34) und der zweiten Innenwandfläche (258) ausgestattet ist, wobei die zweistufige Nut (40) aus einer verriegelnden Nut (36) an der Öffnungsseite davon und einer angrenzenden aufnehmenden Nut (38) an der Innenseite davon gebildet wird, und wobei das elastische ringförmige Anschlagelement (42) in der zweistufigen Nut (40) angeordnet wird;
der Innenradius des weiblichen Körpers (254) an einem Abschnitt, wo die aufnehmende Nut (40) gebildet wird, länger ist als die Länge der Summe des Radius des zweiten kreisförmigen, zylindrischen Abschnittes (256) und des Durchmessers einer Querschnittsfläche des elastischen ringförmigen Anschlagelementes (42), und die Tiefe der Ringnut (40) in einer radialen Richtung des männlichen Körpers (272) vom ersten kreisförmigen, zylindrischen Abschnitt (22) und die Tiefe der verriegelnden Nut (40) in einer radialen Richtung des weiblichen Körpers (254) von der ersten Innenwandfläche (34) größer ausgebildet sind als der Durchmesser der Querschnittsfläche des elastischen ringförmigen Anschlagelementes (42); oder
(2) der männliche Körper (232) ebenfalls mit einer zweistufigen Nut (240) zwischen dem ersten kreisförmigen, zylindrischen Abschnitt (22) und dem zweiten kreisförmigen, zylindrischen Abschnitt ausgestattet ist, wobei die zweistufige Nut (240) aus einer verriegelnden Nut (236) an der distalen Endseite davon, in der das elastische ringförmige Anschlagelement (42) angeordnet wird, und einer angrenzenden aufnehmenden Nut (238) an der Basisendseite davon gebildet wird;
der weibliche Körper (234) von einer Öffnung aus, in die der männliche Körper (232) in Richtung der Innenseite eingesetzt wird, aufweist: einen sich öffnenden kegelförmigen Abschnitt (244), der an einem distalen Ende gebildet wird; eine erste Innenwandfläche (34), die einen Kontakt mit dem ersten kreisförmigen, zylindrischen Abschnitt (22) herstellt, wenn der männliche Körper (232) eingesetzt wurde; eine zweite Innenwandfläche (44), die einen Kontakt mit dem zweiten kreisförmigen, zylindrischen Abschnitt (18) herstellt, wenn der männliche Körper (232) eingesetzt wurde; und einen inneren kegelförmigen Abschnitt (46), der sich nach innen von der zweiten Innenwandfläche (44) neigt;
der weibliche Körper (234) ebenfalls mit einer Ringnut (242) zwischen der ersten Innenwandfläche (34) und der zweiten Innenwandfläche (44) ausgestattet ist;
der Innenradius des männlichen Körpers (232) an einem Abschnitt, wo die aufnehmende Nut (238) gebildet wird, kleiner ist als die Länge des Radius der ersten Innenwandfläche (34) minus dem Durchmesser einer Querschnittsfläche des elastischen ringförmigen Anschlagelementes (42), und die Summe der Tiefe der Ringnut (242) in einer radialen Richtung des weiblichen Körpers (234) von der ersten Innenwandfläche (34) und der Tiefe der verriegelnden Nut (236) in einer radialen Richtung des männlichen Körpers (232) vom ersten kreisförmigen, zylindrischen Abschnitt (22) größer ausgebildet ist als der Durchmesser der Querschnittsfläche des elastischen ringförmigen Anschlagelementes (42);
(b) das elastische ringförmige Anschlagelement (42) einen Spalt aufweist, der als ein weggeschnittener Abschnitt aus einer Ringform gebildet wird, wobei der innere Umfangsdurchmesser des elastischen ringförmigen Anschlagelementes (42) kleiner ist als der Außendurchmesser des zweiten kreisförmigen, zylindrischen Abschnittes (18, 256);
der männliche Körper (232, 272) einen dritten kreisförmigen, zylindrischen Abschnitt (14) an der distalen Endseite des äußeren kegelförmigen Abschnittes (16) aufweist;
der weibliche Körper (234, 254) auf der Innenseite des inneren kegelförmigen Abschnittes (46) eine dritte Innenwandfläche (48) aufweist, die einen Kontakt mit dem dritten kreisförmigen, zylindrischen Abschnitt (14) herstellt, wenn der männliche Körper (232, 272) eingesetzt wurde; und
eine ein Dichtungselement aufnehmende Nut (50), die ein elastisches ringförmiges Dichtungselement (54) für das Abdichten einer Flüssigkeit aufnimmt, an der dritten Innenwandfläche (48) oder am dritten kreisförmigen, zylindrischen Abschnitt (14) oder über sowohl die dritte Innenwandfläche (48) als auch den dritten kreisförmigen, zylindrischen Abschnitt (14) vorhanden ist;
**dadurch gekennzeichnet, dass**:
ein Marker (276) am ersten kreisförmigen, zylindrischen Abschnitt (22) vorhanden ist, wobei der Marker (276) die erste Innenwandfläche (34) kontaktiert, wenn der männliche Körper (232, 272) und der weibliche Körper (234, 254) verbunden werden;
der Marker (276) eine ringförmige Staubabdichtung ist und die Staubabdichtung in einer Ringnut (274) aufgenommen wird, die am ersten kreisförmigen, zylindrischen Abschnitt (22) ausgebildet ist; und
die Beziehung A > B > C erfüllt wird, wobei A die Länge in der axialen Richtung des zweiten kreisförmigen, zylindrischen Abschnittes (18, 256) ist, B die Länge in der axialen Richtung vom distalen Ende eines Abschnittes mit einem gleichmäßigen Außendurchmesser des dritten kreisförmigen, zylindrischen Abschnittes (14) bis zum Ende an der Basisseite eines Kontaktabschnittes zwischen dem elastischen ringförmigen Dichtungselement und dem dritten kreisförmigen, zylindrischen Abschnitt (14) ist und C die Länge in der axialen Richtung vom Ende an der Öffnungsseite der ersten Innenwandfläche (34) bis zum Endabschnitt an der Öffnungsseite des Markers (276) ist.

2. Rohranschlussstück (270, 230) nach Anspruch 1, bei dem das elastische ringförmige Anschlagelement (42) mit einem äußeren Umfangsdurchmesser ausgebildet ist, der größer ist als der Innendurchmesser der ersten Innenwandfläche (34) und kleiner ist als der Innendurchmesser der verriegelnden Nut (20, 242), und wobei der äußere Umfangsdurchmesser des elastischen ringförmigen Anschlagelementes (42), wenn beide Endabschnitte (42A, 42B) davon einen Kontakt miteinander herstellen, kleiner ist als der Innendurchmesser der ersten Innenwandfläche (34) und größer ist als der Innendurchmesser der zweiten Innenwandfläche (44).

3. Rohranschlussstück (270) nach Anspruch 1, wenn (1) der Fall ist, bei dem der Winkel, der zwischen der Wandfläche an der distalen Endseite der Ringnut (20) und einer axialen Linie des Rohranschlussstückes gebildet wird, 90° bis 30° beträgt, und wobei der Winkel, der zwischen der Wandfläche auf der Öffnungsseite der verriegelnden Nut (36) und der axialen Linie des Rohranschlussstückes gebildet wird, 90° bis 45° beträgt.

4. Rohranschlussstück (230) nach Anspruch 1, wenn (2) der Fall ist, bei dem der Winkel, der zwischen der Wandfläche an der Seite des Öffnungsendes der Ringnut (242) und einer axialen Linie des Rohranschlussstückes gebildet wird, 90° bis 30° beträgt, und wobei der Winkel, der zwischen der Wandfläche auf der distalen Endseite der verriegelnden Nut (236) und der axialen Linie des Rohranschlussstückes gebildet wird, 90° bis 45° beträgt.

5. Rohranschlussstück (230) nach Anspruch 1, bei dem die Härte des weiblichen Körpers (234, 254) größer ist als die Härte des männlichen Körpers (232, 272).

6. Schlauch (60) mit dem Rohranschlussstück (270, 230) nach einem der Ansprüche 1 bis 5, bei dem der männliche Körper (272, 232) allein oder der weibliche Körper (254, 254) allein an einem Ende des Schlauches (60) vorhanden ist, oder bei dem zwei männliche Körper, zwei weibliche Körper oder ein männlicher Körper und ein weiblicher Körper an beiden Enden des Schlauches (60) vorhanden sind.

7. Schlauch (200) mit dem Rohranschlussstück nach Anspruch 6, bei dem:
der weibliche Körper (254) des Rohranschlussstückes (270) mindestens an einem Ende des Schlauches vorhanden ist; und
der Schlauch (200) eine innere Oberflächenschicht (202), eine Verstärkungsschicht (204) auf der Außenseite der inneren Oberflächenschicht und eine äußere Oberflächenschicht (206) auf der Außenseite der Verstärkungsschicht (204) aufweist.

8. Schlauch (200) mit dem Rohranschlussstück nach Anspruch 6 oder Anspruch 7, bei dem die Verstärkungsschicht (204) ein Metalldrahtmaschenmaterial oder einen Metalldraht aufweist, das darin gewickelt ist.

## Revendications

1. Raccord de tuyau (230, 270) équipé d'un corps mâle circulaire de forme cylindrique (232, 272), d'un corps femelle circulaire de forme cylindrique (234, 254) dans lequel le corps mâle (232, 272) est introduit, et un membre d'arrêt élastique en forme d'anneau (42) qui bloque et joint le corps mâle (232, 272) et le corps femelle (234, 254), dans lequel:
(a) le corps mâle (232, 272) a, depuis une extrémité de base de celui-ci vers un extrémité distale de celui-ci, une première partie circulaire cylindrique (22), une deuxième partie circulaire cylindrique (18, 256) ayant un diamètre extérieur qui est le même que celui de la première partie circulaire cylindrique (22) ou un diamètre extérieur qui est plus petit que celui de la première partie circulaire cylindrique (22), et une partie conique extérieure qui s'incline vers l'intérieur de la deuxième partie circulaire cylindrique (18, 256);
dans lequel:
(1) le corps mâle (272) est aussi équipé d'une rainure annulaire (20) entre la première partie circulaire cylindrique (22) et la deuxième partie circulaire cylindrique (256); le corps femelle (254) a, depuis une ouverture dans laquelle le corps mâle (272) est introduit vers l'intérieur, lorsque le corps mâle (272) a été introduit, une première face de paroi intérieure (34) qui entre en contact avec la première partie circulaire cylindrique (22), une deuxième face de paroi intérieure (258) qui entre en contact avec la deuxième partie circulaire cylindrique (256) et une partie conique intérieure (46) qui s'incline vers l'intérieur de la deuxième face de paroi intérieure (258); le corps femelle (254) est aussi équipé d'une rainure à deux étages (40) entre la première face de paroi intérieure (34) et la deuxième face de paroi intérieure (258), la rainure à deux étages (40) étant formée d'une rainure de blocage (36) du côté d'ouverture de celle-ci et d'une rainure de retenue adjacente (38) à l'intérieur de celle-ci, et le membre d'arrêt élastique en forme d'anneau (42) est disposé dans la rainure à deux étages (40),
le rayon interne du corps femelle (254) au niveau d'une partie où la rainure de retenue (40) est formée étant plus long que la longueur de la somme du rayon de la deuxième partie circulaire cylindrique (256) et du diamètre d'une face transversale du membre d'arrêt élastique en forme d'anneau (42), et la profondeur de la rainure annulaire (40) dans une direction radiale du corps mâle (272) depuis la première partie circulaire cylindrique (22) et la profondeur de la rainure de blocage (40) dans une direction radiale du corps femelle (254) depuis la première face de paroi intérieure (34) sont formées plus grandes que le diamètre de la face transversale du membre d'arrêt élastique en forme d'anneau (42); ou bien
(2) le corps mâle (232) est aussi équipé d'une rainure à deux étages (240) entre la première partie circulaire cylindrique (22) et la deuxième partie circulaire cylindrique, la rainure à deux étages (240) étant formée d'une rainure de blocage (236) du côté de l'extrémité distale de celle-ci dans laquelle le membre d'arrêt élastique en forme d'anneau (42) est disposé, et d'une rainure de retenue adjacente (238) du coté de l'extrémité de base de celle-ci;
le corps femelle (234) a, depuis une ouverture dans laquelle le corps mâle (232) est introduit vers l'intérieur, une partie conique d'ouverture (244) formée à une extrémité distale, une première face de paroi intérieure (34) qui entre en contact avec la première partie circulaire cylindrique (22) lorsque le corps mâle (232) a été introduit, une deuxième face de paroi intérieure (44) qui entre en contact avec la deuxième partie circulaire cylindrique (18) lorsque le corps mâle (232) a été introduit, et une partie conique intérieure (46) qui s'incline vers l'intérieur de la deuxième face de paroi intérieure (44);
le corps femelle (234) est aussi équipé d'une rainure annulaire (242) entre la première face de paroi intérieure (34) et la deuxième face de paroi intérieure (44);
le rayon interne du corps mâle (232) au niveau d'une partie où la rainure de retenue (238) est formée étant plus petit que la longueur du rayon de la première face de paroi intérieure (34) moins le diamètre d'une face transversale du membre d'arrêt élastique en forme d'anneau (42), et la somme de la profondeur de la rainure annulaire (242) dans une direction radiale du corps femelle (234) depuis la première face de paroi intérieure (34) et de la profondeur de la rainure de retenue (236) dans une direction radiale du corps mâle (232) depuis la première partie circulaire cylindrique (22), est formée plus grande que le diamètre de la face transversale du membre d'arrêt élastique en forme d'anneau (42);
(b) le membre d'arrêt élastique en forme d'anneau (42) a un vide formé comme une partie découpée d'une forme en anneau, avec le diamètre périphérique interne du membre d'arrêt élastique en forme d'anneau (42) étant plus petit que le diamètre extérieur de la deuxième partie circulaire cylindrique (18, 256).
le corps mâle (232, 272) a une troisième partie circulaire cylindrique (14) du côté de l'extrémité distale de la partie conique extérieure (16);
le corps femelle (234, 254) a au niveau de l'intérieur de la partie conique intérieure (46) une troisième face de paroi intérieure (48) qui entre en contact avec la troisième partie circulaire cylindrique (14) lorsque le corps mâle (232, 272) a été introduit; et
une rainure de retenue de membre de scellement (50) qui loge un membre de scellement élastique en forme d'anneau (54) pour sceller un liquide est fournie au niveau de la troisième face de paroi intérieure (48) ou de la troisième partie circulaire cylindrique (14), ou bien à travers la troisième face de paroi intérieure (48) et la troisième partie circulaire cylindrique (14) toutes les deux;
**caractérisé en ce que**:
un marqueur (276) est fourni au niveau de la première partie circulaire cylindrique (22), le marqueur (276) entrant en contact avec la première face de paroi intérieure (34) lorsque le corps mâle (232, 272) et le corps femelle (234, 254) sont joints;
le marqueur (276) est un joint étanche aux poussières en forme d'anneau, et le joint étanche aux poussières est logé dans une rainure annulaire (274) formée au niveau de la première partie circulaire cylindrique (22); et
la relation A > B > C est satisfaite lorsque A est la longueur dans la direction axiale de la deuxième partie circulaire cylindrique (18, 156), B est la longueur dans la direction axiale depuis l'extrémité distale d'une partie ayant un diamètre extérieur uniforme de la troisième partie circulaire cylindrique (14) jusqu'à l'extrémité du côté de base d'une partie de contact entre le membre de scellement élastique en forme d'anneau et la troisième partie circulaire cylindrique (14), et C est la longueur dans la direction axiale depuis l'extrémité au niveau du côté d'ouverture de la première face de paroi intérieure (34) jusqu'à la partie d'extrémité au niveau du côté d'ouverture du marqueur (276).

2. Raccord de tuyau (270, 230) selon la revendication 1, dans lequel le membre d'arrêt élastique en forme d'anneau (42) est formé avec un diamètre périphérique externe qui est plus grand que le diamètre interne de la première face de paroi intérieure (34) et plus petit que le diamètre interne de la rainure de blocage (20, 242), et le diamètre périphérique externe du membre d'arrêt élastique en forme d'anneau (42), lorsque les deux parties d'extrémité (42A, 42B) de celui-ci sont en contact l'une avec l'autre, est plus petit que le diamètre interne de la première face de paroi intérieure (34) et plus grand que le diamètre interne de la deuxième face de paroi intérieure (44).

3. Raccord de tuyau (270) selon la revendication 1, lorsque (1) est le cas, dans lequel l'angle créé entre la face de paroi du côté de l'extrémité distale de la rainure annulaire (20) et une ligne axiale du raccord de tuyau fait 90° à 30°, et l'angle créé entre la face de paroi du côté d'ouverture de la rainure de blocage (36) et la ligne axiale du raccord de tuyau fait 90° à 45°.

4. Raccord de tuyau (230) selon la revendication 1, lorsque (2) est le cas, dans lequel l'angle créé entre la face de paroi du côté de l'extrémité d'ouverture de la rainure annulaire (242) et une ligne axiale du raccord de tuyau fait 90° à 30°, et l'angle créé entre la face de paroi du côté de l'extrémité distale de la rainure de blocage (236) et la ligne axiale du raccord de tuyau fait 90° à 45°.

5. Raccord de tuyau (230) selon la revendication 1, dans lequel la dureté du corps femelle (234, 254) est plus grande que la dureté du corps mâle (232, 272).

6. Tuyau (60) avec le raccord de tuyau (270, 230) selon l'une quelconque des revendications 1 à 5, dans lequel le corps mâle (272, 232) seul ou le corps femelle (254, 254) seul est fourni à une extrémité du tuyau (60), ou bien deux corps mâles, deux corps femelles, ou un corps mâle et un corps femelle sont fournis aux deux extrémités du tuyau (60).

7. Tuyau (200) avec le raccord de tuyau selon la revendication 6, dans lequel:
le corps femelle (254) du raccord de tuyau (270) est au moins à une extrémité du tuyau;et
le tuyau (200) a une couche de face interne (202), une couche de renforcement (204) à l'extérieur de la couche de face interne, et une couche de face externe (206) à l'extérieur de la couche de renforcement (204).

8. Tuyau (200) avec le raccord de tuyau selon la revendication 6 ou la revendication 7, dans lequel la couche de renforcement (204) a du treillis métallique ou du fil métallique enroulé dedans.
